# EUROPEAN PATENT APPLICATION

(11) **EP 4 797 700 A1**
(43) Date of publication of application: **26.08.2026**
(21) Application number: 24881204.2
(22) Date of filing: 15.08.2024
(51) Int. Cl.: H04N 19/70, H04N 19/60

(54) **IMAGE PROCESSING METHOD AND SYSTEM**

(30) Priority: 26.10.2023 CN 202311402967
(71) Applicant: Yinwang Intelligent Technologies Co., Ltd., Shenzhen, Guangdong 518110 (CN)
(72) Inventor: LIN, Yongbing, Shenzhen, Guangdong 518129 (CN); WAN, Lei, Shenzhen, Guangdong 518129 (CN); MA, Sha, Shenzhen, Guangdong 518129 (CN); GAO, Yongqiang, Shenzhen, Guangdong 518129 (CN)
(74) Representative: Pfenning, Meinig & Partner mbB
(86) International application number: PCT/CN2024/112274
(87) International publication number: WO 2025/086836

(57) **Abstract**

This application provides an image processing method and system. The method includes: A first module obtains a first raw image; transforms the first raw image into a first sub-image, a second sub-image, a third sub-image, and a fourth sub-image; stitches the first sub-image, the second sub-image, the third sub-image, and the fourth sub-image in a specified stitching manner, to obtain a grayscale image; encodes the grayscale image to obtain an encoded stream; and sends the encoded stream to a second module. The second module decodes the encoded stream to obtain the grayscale image; and performs splitting and inverse transform on the grayscale image to obtain a second raw image. Because the first module does not need to perform complex ISP processing, processing time of the first module for a raw image can be reduced, and computing complexity can be reduced. In addition, the first module encodes the grayscale image, and an amount of encoded data of the grayscale image is small. Therefore, the grayscale image can be encoded at a high speed. This helps improve image compression performance.

## Description

### CROSS-REFERENCE TO RELATED APPLICATIONS

This application claims priority to Chinese Patent Application No. 202311402967.8, filed with the China National Intellectual Property Administration on October 26, 2023 and entitled "IMAGE PROCESSING METHOD AND SYSTEM", which is incorporated herein by reference in its entirety.

### TECHNICAL FIELD

This application relates to the field of image processing technologies, and in particular, to an image processing method and system.

### BACKGROUND

A camera features high resolution, clear imaging, non-contact measurement, use convenience, low costs, and the like, and is a mandatory sensor for intelligent driving sensing. An increasing quantity of cameras are mounted on a vehicle to implement sensing coverage without a blind spot, and are applied to the field of advanced driver assistance systems (advanced driver assistance system, ADAS), automated driving systems (Automated Driving System, ADS), intelligent driving systems, or the like. With continuous improvement of resolution, a frame rate, a bit width and depth, and the like of the camera, output of a video image (for example, a raw image captured by the camera) has an increasingly high requirement on a transmission bandwidth. To alleviate pressure of video image transmission, an image encoding (or referred to as image compression) method is generally used to reduce the requirement on the transmission bandwidth. In an intelligent driving application scenario, to meet a safety-first requirement for automated driving, image compression (for example, raw image compression) needs to meet compression requirements such as a low latency, low complexity, and high compression performance.

Currently, a solution for compressing a raw image has problems of low compression performance (the compression performance is less than 10 times) and high compression costs (for example, when image signal processing (Image signal processing, ISP) is performed on the raw image, computing complexity is high, and a large quantity of computing resources need to be consumed, resulting in an increase in the image compression costs), and cannot meet an image compression requirement (for example, a requirement for compression performance between 30 times and 50 times) in an advanced intelligent driving application scenario. For example, in a raw image compression solution, a raw image is compressed in a piecewise linear (Pixel Wise Linear, PWL) compression manner. For example, raw data is compressed from 24 bits to 12 bits, reducing a transmission bandwidth requirement by one time. However, in this solution, because correlation between pixels is not used, raw data compression performance is low, and the compression performance is usually about two times. In another raw image compression solution, a raw image is compressed by using a JPEG low-latency encoding standard (JPEG Extra Speed, JPEG-XS) (or ResPro). However, although this solution can further improve raw data compression performance, the compression performance is between three times and six times, and still cannot meet a requirement for high compression performance in the advanced intelligent driving application scenario.

### SUMMARY

This application provides an image processing method and system, to reduce computing complexity and improve image compression performance.

According to a first aspect, this application provides an image processing method. The method may be applied to the field of advanced driver assistance systems (advanced driver assistance system, ADAS), automated driving systems, intelligent driving systems, or the like. For example, the method may be performed by an image processing system or a component (for example, a chip, a chip system, or a circuit) that can support the image processing system in implementing a function required for the method. For example, the image processing system may include a first module and a second module. In an example, the first module included in the image processing system may be deployed in an image capturing apparatus, and the second module included in the image processing system may be deployed in a mobile data computing platform (Mobile data center, MDC) or a cockpit domain controller (Cockpit Domain Controller, CDC). In another example, the first module included in the image processing system may be deployed in an MDC, and the second module included in the image processing system may be deployed in a CDC. In another example, the first module included in the image processing system may be deployed in an MDC, a CDC, or an industrial computer, and the second module included in the image processing system may be deployed in a server or a cloud. Optionally, an example in which the image processing method is implemented by exchanging data between the first module and the second module included in the image processing system is used for description. In the method, after obtaining a first raw image, the first module may transform the first raw image into a first sub-image, a second sub-image, a third sub-image, and a fourth sub-image. Subsequently, the first module may stitch the first sub-image, the second sub-image, the third sub-image, and the fourth sub-image in a specified stitching manner, to obtain a grayscale image, and may encode the grayscale image to obtain an encoded stream, and send the encoded stream to the second module. Then, the second module decodes the encoded stream to obtain the grayscale image, and may split the grayscale image into the first sub-image, the second sub-image, the third sub-image, and the fourth sub-image. Finally, the second module may perform inverse transform on the first sub-image, the second sub-image, the third sub-image, and the fourth sub-image to obtain a second raw image.

In this method, because the first module does not need to perform complex ISP processing, processing time of the first module for a raw image (for example, preprocessing time and encoding time for the raw image) can be reduced, and computing complexity can be reduced (for example, the computing complexity can be reduced by more than 60%). This helps improve image compression performance. In addition, because the first module encodes the grayscale image (or referred to as single-channel encoding), and an amount of encoded data of the grayscale image is small, the grayscale image can be encoded at a high speed, and the first module encodes the grayscale image by using (or reusing) an existing image encoding and decoding standard, thereby effectively improving image compression performance.

In a possible design, that the first module stitches the first sub-image, the second sub-image, the third sub-image, and the fourth sub-image in the specified stitching manner, to obtain the grayscale image includes: The first module may stitch the first sub-image, the second sub-image, the third sub-image, and the fourth sub-image in a matrix concatenation manner, to obtain the grayscale image, where a shape of the grayscale image is a grid.

In the foregoing design, a length and a width of the grayscale image obtained in the matrix concatenation manner are consistent with a length and a width of the first raw image. In addition, because single-channel encoding is subsequently performed on the stitched grayscale image, an amount of encoded data is small, so that an encoding speed is high. This helps improve image compression performance.

In a possible design, that the first module stitches the first sub-image, the second sub-image, the third sub-image, and the fourth sub-image in the specified stitching manner, to obtain the grayscale image includes: The first module may stitch the first sub-image, the second sub-image, the third sub-image, and the fourth sub-image in a horizontal stitching manner, to obtain the grayscale image, where a shape of the grayscale image is a strip.

In the foregoing design, a plurality of sub-images are stitched in the horizontal stitching manner, and actually no extra latency is caused. Therefore, this design is more suitable for a low-delay scenario. In addition, because single-channel encoding is subsequently performed on the stitched grayscale image, an amount of encoded data is small, so that an encoding speed is high, and image compression performance is not reduced.

In a possible design, that the first module transforms the first raw image into the first sub-image, the second sub-image, the third sub-image, and the fourth sub-image includes: The first module may first perform nonlinear transform on the first raw image to obtain a transformed first raw image; and then the first module may perform color transform on the transformed first raw image to obtain the first sub-image, the second sub-image, the third sub-image, and the fourth sub-image. That the first module encodes the grayscale image to obtain the encoded stream includes: The first module may encode the grayscale image according to a specified video encoding standard, to obtain the encoded stream.

In the foregoing design, nonlinear transform is performed on the first raw image, so that data distribution of the raw image can be more suitable for subsequent encoding, and an implementation is simple, thereby improving image encoding performance and reducing an image encoding latency. Color transform is performed on the transformed first raw image, so that data correlation between different channels can be removed, and redundant information between color signals can be removed. This helps improve image compression performance, and can reduce computing complexity.

In a possible design, the transformed first raw image may include a plurality of image units, any image unit includes a plurality of pixels, and any pixel corresponds to one pixel value. That the first module performs color transform on the transformed first raw image to obtain the first sub-image, the second sub-image, the third sub-image, and the fourth sub-image includes: The first module may first determine, based on pixel values of a plurality of pixels included in each of the plurality of image units, a first value, a second value, a third value, and a fourth value that correspond to each image unit. Then, the first module may generate the first sub-image based on first values respectively corresponding to the plurality of image units, generate the second sub-image based on second values respectively corresponding to the plurality of image units, generate the third sub-image based on third values respectively corresponding to the plurality of image units, and generate the fourth sub-image based on fourth values respectively corresponding to the plurality of image units.

In the foregoing design, the first value, the second value, the third value, and the fourth value that correspond to each image unit may be effectively calculated in a timely manner by using the image unit as a granularity of the first raw image. Then, the first sub-image, the second sub-image, the third sub-image, and the fourth sub-image may be accurately and correspondingly obtained by integrating the first values, the second values, the third values, and the fourth values respectively corresponding to the plurality of image units.

In a possible design, that the second module performs inverse transform on the first sub-image, the second sub-image, the third sub-image, and the fourth sub-image to obtain the second raw image includes: The second module may determine, based on the first sub-image, the first value corresponding to each of the plurality of image units, determine, based on the second sub-image, the second value corresponding to each of the plurality of image units, determine, based on the third sub-image, the third value corresponding to each of the plurality of image units, and determine, based on the fourth sub-image, the fourth value corresponding to each of the plurality of image units. Subsequently, the second module may determine, based on the first value, the second value, the third value, and the fourth value that correspond to each of the plurality of image units, the pixel values of the plurality of pixels included in each image unit. Then, the second module may determine the transformed first raw image based on the pixel values of the plurality of pixels included in each of the plurality of image units, where the transformed first raw image is used as the second raw image.

In the foregoing design, the second raw image can be effectively obtained by performing inverse transform on the grayscale image. This implementation is simple, and a raw image used to assist subsequent processing (for example, oriented to machine vision or human eye vision) and perception precision that can be oriented to machine vision can be effectively obtained in a timely manner, thereby improving a visual effect for a human eye.

In a possible design, the second raw image is used as an input of a raw domain visual perception module, and the raw domain visual perception module is configured to perform perception and recognition; or the second raw image is used as an input of an image signal processing model, and the image signal processing model is used to generate an RGB image suitable for a human eye to view.

In the foregoing design, the second raw image is used as the input of the raw domain visual perception module, so that a machine vision task (for example, classification, target recognition, target detection, and segmentation) can be directly performed in a raw domain. In addition, neither the first module nor the second module relates to complex ISP processing. This can avoid that visual perception precision of the raw domain visual perception module is affected because complex ISP processing causes noise, and can help improve a visual perception effect of the raw domain visual perception module. In addition, the second raw image is used as the input of the image signal processing model, so that an RGB image suitable for a human eye to view can be effectively obtained in a timely manner, thereby helping improve a visual effect for the human eye.

In a possible design, there is a mapping relationship between the image signal processing model and an encoding rate corresponding to the first raw image.

In the foregoing design, considering that the first module may introduce noise in an image encoding process, and different encoding bit rates (or referred to as different compression rates) correspond to different noise levels, a corresponding image signal processing model (for example, an AI-ISP model) is trained for each encoding rate, so that noise corresponding to different encoding rates can be effectively removed, and an image with a better visual effect for a human eye can be obtained at each encoding rate.

In a possible design, the first sub-image is a Y sub-image, the second sub-image is a Dg sub-image, the third sub-image is a Co sub-image, and the fourth sub-image is a Cg sub-image.

In a possible design, the first module is deployed in an image capturing apparatus, and the second module is deployed in a first data processing module; or the first module is deployed in the first data processing module, and the second module is deployed in a second data processing module.

In the foregoing design, the first module and the second module are flexibly deployed based on an actual requirement of a vehicle or a user, so that requirements in different application scenarios can be met (or adapted).

According to a second aspect, this application provides a possible image processing system. For example, the image processing system may be an image processing system that has a function required for implementing the method in the first aspect, or may be an element (for example, a plug-in, a component, or a chip) that is disposed in the image processing system and that has a function required for implementing the method in the first aspect, or may be any other device (for example, an in-vehicle device (such as a camera, an MDC, or a CDC)) that has a function required for implementing the method in the first aspect, or may be an element that is disposed in any other device and that has a function required for implementing the method in the first aspect.

When the image processing system is configured to implement any possible method in the first aspect, for beneficial effects, refer to corresponding descriptions in the first aspect. Details are not described herein again. The image processing system has a function of implementing the method in the first aspect. The function may be implemented by using hardware, or may be implemented by using hardware executing corresponding software. The hardware or the software includes one or more modules corresponding to the foregoing function. In a possible design, the image processing system includes a first module and a second module. The first module is configured to obtain a first raw image, and transform the first raw image into a first sub-image, a second sub-image, a third sub-image, and a fourth sub-image. The first module is further configured to stitch the first sub-image, the second sub-image, the third sub-image, and the fourth sub-image in a specified stitching manner, to obtain a grayscale image. The first module is further configured to encode the grayscale image to obtain an encoded stream, and send the encoded stream to the second module. The second module is configured to decode the encoded stream to obtain the grayscale image. The second module is further configured to split the grayscale image into the first sub-image, the second sub-image, the third sub-image, and the fourth sub-image. The second module is further configured to perform inverse transform on the first sub-image, the second sub-image, the third sub-image, and the fourth sub-image to obtain a second raw image. These modules may perform corresponding functions in any possible design of the first aspect. For details, refer to detailed descriptions in the method example. Details are not described herein again.

According to a third aspect, this application provides a possible image processing system. The image processing system includes a transceiver and a processor. Optionally, the image processing system further includes a memory. The memory is configured to store a computer program or instructions. The processor is coupled to the memory and the transceiver. When the processor executes the computer program or the instructions, the image processing system is enabled to perform the method in any possible design of the first aspect. In an example, the transceiver may be a transceiver apparatus integrated with data receiving and sending functions. In another example, the transceiver may alternatively include a transmitter and a receiver. The transmitter is configured to send data, and the receiver is configured to receive data.

According to a fourth aspect, this application provides a possible image processing system. The image processing system includes one or more of an MDC, a CDC, an industrial computer, or a server (or a cloud). Optionally, the image processing system may also include a display module, configured to display a raw image. For example, the image processing system includes the MDC and the CDC. In an example, a first module is deployed on the MDC, and a second module is deployed on the CDC. In another example, a first module is deployed on an image capturing apparatus, and a second module is deployed on each of the MDC and the CDC. For example, there may be one or more MDCs or CDCs included in the image processing system, and there may be one or more first modules or second modules. This is not limited in this application. The image processing system may be deployed on a vehicle. Correspondingly, this application further provides a vehicle including an image capturing apparatus and the foregoing image processing system. The image capturing apparatus may be configured to obtain an image (for example, a raw image) corresponding to surrounding environment information of the vehicle.

According to a fifth aspect, this application provides a computer program product. The computer program product includes a computer program or instructions. When the computer program or the instructions are run on a computer, the computer is enabled to perform the method in any possible design of the first aspect.

According to a sixth aspect, this application provides a computer-readable storage medium. The computer-readable storage medium stores a computer program or instructions. When the computer program or the instructions are executed by a computer, the computer is enabled to perform the method in any possible design of the first aspect.

According to a seventh aspect, this application further provides a chip, including a processor. The processor is coupled to a memory, and is configured to execute a computer program or instructions stored in the memory. When the computer program or the instructions are executed, the method in any possible design of the first aspect is implemented.

According to an eighth aspect, this application further provides a chip system. The chip system includes a processor, configured to support a computer apparatus in implementing the method in any possible design of the first aspect. In a possible design, the chip system further includes a memory, and the memory is configured to store a program and data that are necessary for the computer apparatus. The chip system may include a chip, or may include a chip and another discrete component.

In this application, based on implementations according to the foregoing aspects, the implementations may be further combined to provide more implementations.

### BRIEF DESCRIPTION OF DRAWINGS

FIG. 1 is an example of a diagram of a possible system architecture according to an embodiment of this application;
FIG. 2 is an example of a schematic flowchart of an image processing method according to an embodiment of this application;
FIG. 3a is an example of a diagram of a YCoCgDg image according to an embodiment of this application;
FIG. 3b is an example of a diagram of another YCoCgDg image according to an embodiment of this application;
FIG. 4a is an example of a diagram in which a conventional image encoding and decoding scheme is used in an application scenario 1 according to an embodiment of this application;
FIG. 4b is an example of a diagram in which an image processing solution provided in an embodiment of this application is used in an application scenario 1 according to an embodiment of this application;
FIG. 4c is an example of another diagram in which a conventional image encoding and decoding scheme is used in an application scenario 1 according to an embodiment of this application;
FIG. 4d is an example of another diagram in which an image processing solution provided in an embodiment of this application is used in an application scenario 1 according to an embodiment of this application;
FIG. 5a is an example of a diagram in which a conventional image encoding and decoding scheme is used in an application scenario 2 according to an embodiment of this application;
FIG. 5b is an example of a diagram in which an image processing solution provided in an embodiment of this application is used in an application scenario 2 according to an embodiment of this application;
FIG. 5c is an example of another diagram in which an image processing solution provided in an embodiment of this application is used in an application scenario 2 according to an embodiment of this application;
FIG. 6 is an example of a diagram of a structure of a possible image processing system according to an embodiment of this application; and
FIG. 7 is an example of a diagram of a structure of another possible image processing system according to an embodiment of this application.

### DESCRIPTION OF EMBODIMENTS

Before technical solutions provided in this application are described, some terms in this application are first explained and described, to facilitate understanding by a person skilled in the art.
(1) Image encoding and image decoding: Image encoding may also be referred to as image compression, and means a technology in which an image or information included in an image is represented by using a small quantity of bits under a condition of meeting specific quality (for example, a signal-to-noise ratio requirement or a subjective assessment score). Image decoding is an inverse process of image encoding. Conventional image encoding and decoding standards such as JPEG-XS, H.264, or H.265 are mainly oriented toward application scenarios with a high compression ratio and a low bit rate, and usually cannot meet requirements of visual perception and machine recognition in automated driving for a low latency and low complexity. The JPEG-XS standard is the first international standard of low-latency image encoding and decoding oriented toward a Bayer raw image, and application scenarios include compression of a video signal inside a camera, compression and transmission of a Bayer raw video of automated driving, high-speed video compression over a storage interface, and the like.
(2) Bayer raw (Bayer raw) image: may also be referred to as a Bayer image or a raw image. An original meaning of raw is "unprocessed". It may be understood that the Bayer raw image means that a CMOS image sensor, a CCD (charge coupled device) image sensor, or the like converts a captured light source signal into raw data of a digital signal, that is, a raw image inside a camera. Therefore, the Bayer raw image may also be conceptualized as "raw image encoded data" or more vividly referred to as "digital negative".
   In addition, in embodiments of this application, the Bayer raw image includes three color components, each pixel in the Bayer raw image has only one color component, and a value of the color component may be equivalent to a pixel value of the pixel. In an example, the three color components are a red (red, R) component, a blue (blue, B) component, and a green (green, G) component, respectively. In another example, the three color components are an R component, a B component, and a yellow (yellow, Y') component, respectively. Specific color components included in the Bayer raw image are related to a color filter in a camera.
(3) Computing power: means computing power (Computing Power) of a device. From mobile phones and personal computers (personal computer, PC) to supercomputers, if there is no computing power, various types of software and hardware cannot be used normally. For a personal computer, a higher configuration of a carried central processing unit (Central Processing Unit, CPU), graphics card, or memory usually indicates higher computing power.

Optionally, a unit of the computing power is an indicator and a benchmark for measuring strength of the computing power. Currently, there are a plurality of different measurement methods. Common measurement methods include million instructions per second (Million Instructions Per Second, MIPS), Dhrystone million instructions executed per second (Dhrystone Million Instructions executed Per Second, DMIPS), operations per second (Operations Per Second, OPS), floating-point operations per second (Floating-point Operations Per Second, FLOPS), hash per second (Hash Per Second, Hash/s), and the like.

For example, using FLOPS as an example, FLOPS is always considered as one of main indicators for measuring a computing speed of a computer. In terms of magnitude, computing power of a personal computer is at a GFLOPS level. For another example, using Hash/s as an example, a quantity of hash collisions that can be performed per second by a mining machine for mining the digital currency Bitcoin (obtaining Bitcoin) represents computing power of the mining machine. For example, computing power of a personal computer is at a GHash/s level.

(4) "Sentinel" mode: After a vehicle is parked in a specified area and locked, the vehicle automatically monitors suspicious behavior around the vehicle (for example, a stranger approaches the vehicle or a stranger opens a vehicle door). When detecting suspicious behavior, the vehicle reacts based on severity of a threat. If a severe threat is detected, a vehicle-mounted camera starts video recording, and starts an alarm system, to send a vehicle exception message to a vehicle application (Application, APP) installed on a terminal device (such as a smartphone or a tablet computer) owned by a vehicle user, so as to remind the vehicle user that an accident may occur.

The following describes embodiments of this application in detail with reference to the accompanying drawings.

The following describes a possible system architecture to which an image processing method provided in this application is applicable. It should be noted that these descriptions are for ease of understanding by a person skilled in the art, and are not intended to limit the protection scope claimed by this application.

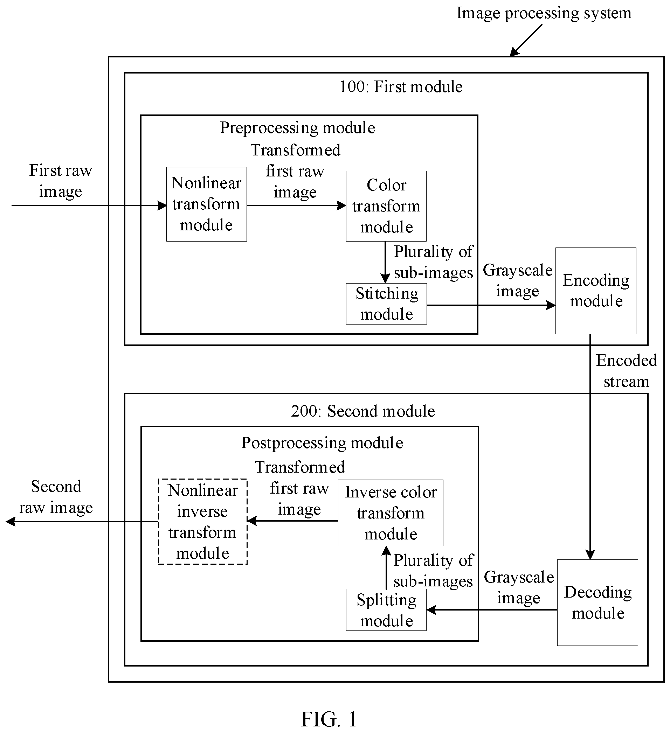

FIG. 1 is an example of a diagram of a possible system architecture to which an embodiment of this application is applicable. As shown in FIG. 1, the system architecture may include a first module 100 and a second module 200. Optionally, the first module 100 and the second module 200 may be in a communication connection through one or more networks. The network may be a wired network, or may be a wireless network. For example, the wireless network may be a wireless fidelity (Wireless Fidelity, Wi-Fi) network, or may be a mobile cellular network, or may be a network in another form. This is not limited in embodiments of this application.

The first module 100 is configured to perform corresponding preprocessing (for example, nonlinear transform (for example, gamma correction) and color transform) on an image (for example, a first raw image) obtained by an image capturing apparatus to obtain a grayscale image, and encode the grayscale image to obtain an encoded stream. Then, the first module 100 is further configured to transmit the encoded stream to the second module 200. The encoded stream is used to carry the grayscale image. Optionally, the first module 100 may be deployed (or disposed) on the image capturing apparatus, or may be deployed on an MDC, a CDC, or an industrial computer in a vehicle.

The image capturing apparatus may be disposed on a vehicle, and is configured to collect or capture information about an environment around the vehicle, to generate a corresponding image (for example, the first raw image). For example, in the field of intelligent driving such as automated driving or assisted driving, a shooting area of the image capturing apparatus may be an external environment of the vehicle. For example, when the vehicle is moving forward, the shooting area may be an area in front of a vehicle head; when the vehicle is reversing, the shooting area may be an area behind a vehicle rear; and when the image capturing apparatus is a 360-degree multi-angle camera, the shooting area may be an area in a 360-degree range around the vehicle, or the like.

For example, the image capturing apparatus may include but is not limited to a visible light camera, a depth camera (that is, a three-dimensional camera), a fisheye camera, a monocular camera, a binocular camera, a near-infrared camera, a video camera, a cockpit camera, an event data recorder (that is, a video recording terminal), a reversing camera, a depth camera, or the like.

It should be understood that the nonlinear transform may also be referred to as nonlinear correction or nonlinear mapping, and nonlinear inverse transform is an inverse process of the nonlinear transform, and may also be referred to as inverse nonlinear correction. The nonlinear transform transforms a pixel value of a pixel in an image from a linear domain to a nonlinear domain (for example, a human eye sensitive domain), to facilitate subsequent processing by an encoding tool. For example, the nonlinear transform may be implemented through table lookup based on a gamma curve. This is easy to implement and helps improve image compression performance (or referred to as image encoding performance).

For example, the first module 100 may be divided into the following modules based on logical functions: a preprocessing module (or referred to as a pre-processing module) and an encoding module. Optionally, the preprocessing module and the encoding module may be separately used as independent units and deployed (or integrated) in a same module (or a same device), or may be separately used as independent units and deployed in different modules (or different devices). The preprocessing module is configured to preprocess (including nonlinear transform and color transform) an image (for example, the first raw image) obtained by the image capturing apparatus to obtain a plurality of sub-images (for example, a first sub-image (for example, a Y sub-image), a second sub-image (for example, a Dg sub-image), a third sub-image (for example, a Co sub-image), and a fourth sub-image (for example, a Cg sub-image)), and stitch the plurality of sub-images to obtain a grayscale image. Based on logical functions, the preprocessing module may be divided into the following modules: a nonlinear transform module, a color transform module, and a stitching module. The nonlinear transform module is configured to perform nonlinear transform on the first raw image to obtain a transformed first raw image. The color transform module is configured to perform color transform on the transformed first raw image to obtain the plurality of sub-images (for example, the first sub-image, the second sub-image, the third sub-image, and the fourth sub-image). The stitching module is configured to stitch the plurality of sub-images into the grayscale image. For example, the stitching module may stitch the plurality of sub-images into the grayscale image in a specified stitching manner (for example, a horizontal stitching manner or a matrix concatenation manner). The encoding module is configured to encode the grayscale image output by the preprocessing module to obtain an encoded stream. It should be noted that, in ISP-part2 (that is, complex ISP processing, which includes demosaic, and optionally, may further include one or more of Gamma, a CCM, tone mapping, image format transform (for example, transform from a raw format to an RGB format and transform from an RGB format to a YUV format), and the like) in a conventional image encoding and decoding scheme, processing for a raw image usually takes 23s (or ms). The preprocessing module included in the first module 100 usually takes 1s (or ms) for processing a raw image. An encoder in the conventional image encoding and decoding scheme usually takes 17s (or ms) for encoding an image in a YUV format. The encoding module included in the first module 100 usually takes 12s (or ms) for encoding a grayscale image.

The second module 200 is configured to: after receiving the encoded stream from the first module 100, decode the encoded stream to obtain the grayscale image, and perform corresponding postprocessing (for example, inverse color transform or nonlinear inverse transform) on the grayscale image to obtain a corresponding image (for example, a second raw image).

In an example, when the first module 100 is deployed in the image capturing apparatus, the second module 200 may be deployed in an MDC or a CDC. In another example, when the first module 100 is deployed in an MDC in a vehicle, the second module 200 may be deployed in a CDC in the vehicle. In another example, when the first module 100 is deployed in an MDC, a CDC, or an industrial computer in a vehicle, the second module 200 may be deployed on a server or a cloud (or referred to as a cloud server, a cloud computing device, or a cloud end).

Optionally, an image (for example, the second raw image) output by the second module 200 may be used as an input of a downstream task module. For example, the downstream task module may be a machine vision task module (for example, a raw domain visual perception module) used for perception in a raw domain, or the downstream task module may be an image signal processing module (for example, a bit rate adaptive AI-ISP module) configured to generate an RGB image suitable for a human eye to view.

For example, the second module 200 may be divided into the following modules based on logical functions: a postprocessing module (or referred to as a post-processing module) and a decoding module. Optionally, the postprocessing module and the decoding module may be separately used as independent units and deployed (or integrated) in a same module (or a same device), or may be separately used as independent units and deployed in different modules (or different devices). The decoding module is configured to decode the encoded stream from the first module 100 to obtain the grayscale image. The postprocessing module is configured to preprocess (for example, perform inverse color transform on) the grayscale image output by the decoding module to obtain a corresponding image (for example, the second raw image). Based on logical functions, the postprocessing module may be divided into the following modules: an inverse color transform module and a splitting module. Optionally, in an example, the postprocessing module may further include a nonlinear inverse transform module. In another example, the postprocessing module does not include a nonlinear inverse transform module, and the nonlinear inverse transform module is deployed in a back-end module (for example, a module oriented to human eye vision). The splitting module is configured to split the grayscale image into the first sub-image, the second sub-image, the third sub-image, and the fourth sub-image. For example, the splitting module may split the grayscale image in a specific stitching manner (for example, a horizontal stitching manner or a matrix concatenation manner) negotiated by the first module and the second module. The inverse color transform module is configured to perform inverse color transform on the first sub-image, the second sub-image, the third sub-image, and the fourth sub-image to obtain the transformed first raw image. The transformed first raw image may be used as the second raw image. When the postprocessing module includes the nonlinear inverse transform module, the nonlinear inverse transform module is configured to perform nonlinear inverse transform on the transformed first raw image to obtain the first raw image. The first raw image may be used as the second raw image.

It should be noted that a decoder in a conventional image encoding and decoding scheme usually takes 7s (or ms) for decoding an encoded stream carrying an image in a YUV format. The decoding module included in the second module 200 usually takes 6s (or ms) for decoding an encoded stream carrying a grayscale image. In the conventional image encoding and decoding scheme, transform from an image in a YUV format to an image in an RGB format usually takes 4s (or ms). The postprocessing module included in the second module 200 usually takes 1s (or ms) for transforming a grayscale image into a raw image.

It should be noted that the vehicle includes but is not limited to an unmanned vehicle, an intelligent vehicle (for example, an automated guided vehicle (automated guided vehicle, AGV)), an electric vehicle, a digital vehicle, an intelligent manufacturing vehicle, or a vehicle in another form.

The image processing method provided in this application may be applied to the field of advanced driver assistance systems, automated driving systems, intelligent driving systems, or the like, and is particularly applicable to image encoding and decoding functions related to advanced intelligent driving.

Optionally, the first module, the preprocessing module (including one or more of the nonlinear transform module, the color transform module, or the stitching module), the encoding module, the second module, the postprocessing module (including one or more of the nonlinear inverse transform module, the inverse color transform module, or the splitting module), and the decoding module may all be implemented by using software or hardware. For example, the following uses the first module as an example to describe an implementation of the first module. Similarly, for implementations of the preprocessing module, the encoding module, the second module, the postprocessing module, and the decoding module, refer to the implementation of the first module. Details are not described herein again.

When implemented by software, the first module may be an application or a code block that runs on a computing device (or a control unit, or the like) that has an image processing capability in a vehicle. The computing device may be at least one of computing devices such as a physical host, a virtual machine, and a container. Further, there may be one or more computing devices. For example, the first module may be an application running on a plurality of hosts/virtual machines/containers.

When implemented by hardware, the first module may include at least one computing device, for example, a server. Alternatively, the first module may be a device implemented by using an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof.

In addition, it should be noted that division into the modules in embodiments of this application is an example, and is merely logical function division. In actual implementation, there may be another division manner. Functional modules in embodiments of this application may be integrated into one module, or each module may exist alone physically, or two or more modules may be integrated into one module. For example, the preprocessing module and the encoding module may be integrated into one module, or the preprocessing module and the encoding module are a same module. The integrated unit may be implemented in a form of hardware, or may be implemented in a form of a software functional unit.

It should be noted that FIG. 1 provides only an example of a system architecture. The example system architecture is intended to describe the technical solutions in embodiments of this application more clearly, and does not constitute a limitation on a system architecture to which the image processing method provided in this application is applicable. In addition, forms and quantities of modules in the system architecture shown in FIG. 1 are merely used as examples, and do not constitute a limitation on this application. In addition, names of the modules in the system architecture shown in FIG. 1 are merely examples, and the names of the modules during specific implementation may alternatively be other names. This is not specifically limited in this application. In addition, a person of ordinary skill in the art may learn that the technical solutions provided in embodiments of this application are also applicable to a similar technical problem as a system architecture evolves.

As described in the background, in the field of automated driving (for example, the field of ADASs or ADSs), driving safety of an automated driving vehicle is very important. In a driving process, the automated driving vehicle usually needs to capture surrounding environment information in a timely manner by using a camera, and detect and recognize the captured surrounding environment information, to effectively avoid obstacles and ensure traveling safety of the automated driving vehicle. However, with continuous improvement of resolution, a frame rate, a bit width and depth, and the like of the camera installed on the vehicle, an output video image causes increasing pressure on a transmission network bandwidth. For example, if the camera uses the 4K 30-fps 12-bit Bayer raw specification, a bandwidth requirement is up to 3 Gbps (4K*2k*30*12). To alleviate network transmission pressure, an image compression (image encoding) method is usually used to reduce a bandwidth requirement. However, an existing image compression solution has problems of poor compression performance and high compression costs, and cannot meet requirements for a low latency and high compression performance in an advanced intelligent driving application scenario. In view of this, this application provides an image processing method, to reduce computing complexity and improve image compression performance.

Based on the system architecture shown in FIG. 1, the following describes in detail a specific implementation of the image processing method in embodiments of this application.

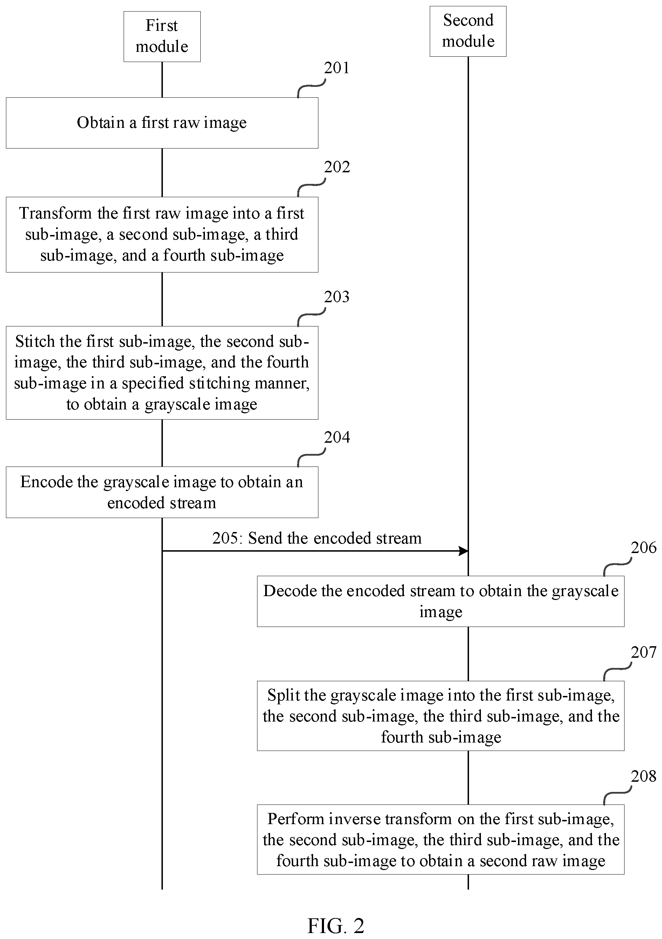

FIG. 2 is a schematic flowchart of an image processing method according to an embodiment of this application. The method is applicable to the system architecture shown in FIG. 1. The method may be performed by an image processing system or a component (for example, a chip, a chip system, or a circuit) that can support the image processing system in implementing a function required for the method. For example, the image processing system may be the image processing system shown in FIG. 1. In an example, the first module included in the image processing system shown in FIG. 1 may be deployed in an image capturing apparatus, and the second module included in the image processing system shown in FIG. 1 may be deployed in a first data processing module (for example, an MDC or a CDC). In another example, the first module included in the image processing system shown in FIG. 1 may be deployed in a first data processing module (for example, an MDC), and the second module included in the image processing system shown in FIG. 1 may be deployed in a second data processing module (for example, a CDC). In another example, the first module included in the image processing system shown in FIG. 1 may be deployed in a first data processing module (for example, an MDC, a CDC, or an industrial computer), and the second module included in the image processing system shown in FIG. 1 may be deployed in a second data processing module (for example, a server or a cloud). Optionally, for ease of describing the technical solutions provided in embodiments of this application, the following uses the first module and the second module included in the image processing system as an example to describe the image processing method implemented by exchanging data between the first module and the second module. As shown in FIG. 2, the method includes the following steps.

Step 201: The first module obtains a first raw image.

In an example, when an image capturing apparatus includes an ISP, the first raw image is a raw image obtained after an original raw image captured by the image capturing apparatus is processed by the internal ISP. A vehicle A is used as an example. In a traveling process of the vehicle A, after capturing a piece of environment information and forming an original raw image, an image capturing apparatus on the vehicle A may send the original raw image to an ISP in the image capturing apparatus. After receiving the original raw image, the ISP may process and optimize the original raw image to obtain the first raw image. Then, the image capturing apparatus may send the first raw image to the first module, or may buffer the first raw image. When the image capturing apparatus buffers the first image, the image capturing apparatus may send the buffered first raw image to the first module in response to an image request of the first module.

In another example, when an image capturing apparatus does not include an ISP, the first raw image is a raw image obtained after an original raw image captured by the image capturing apparatus on a vehicle is processed by an external ISP. The vehicle A is still used as an example. After capturing a piece of environment information and forming an original raw image, the image capturing apparatus on the vehicle A may send the original raw image to an external ISP. After receiving the original raw image, the ISP may process and optimize the original raw image to obtain the first raw image. Then, the ISP may send the first raw image to the first module, or may buffer the first raw image. When the ISP buffers the first raw image, the ISP may send the buffered first raw image to the first module in response to an image request of the first module.

In another example, when an image capturing apparatus does not include an ISP, the first raw image is an original raw image captured by the image capturing apparatus on a vehicle. The vehicle A is still used as an example. After capturing a piece of environment information and forming an original raw image, the image capturing apparatus on the vehicle A may send the original raw image to the first module, or may buffer the original raw image. When the image capturing apparatus buffers the original raw image, the image capturing apparatus may send the buffered original raw image to the first module in response to an image request of the first module.

Step 202: The first module transforms the first raw image into a first sub-image, a second sub-image, a third sub-image, and a fourth sub-image.

For example, a Bayer raw format of the first raw image may include but is not limited to an RGGB format, a GRGB format, or the like. Image signals of such four channels are different from conventional image signals of three channels in an RGB format or a YUV format, are not suitable for direct encoding by a conventional encoder, and need to be further processed for encoding. For example, the image signals of such four channels may be spliced to form a grayscale image suitable for encoding by an encoder.

For example, the Bayer raw format of the first raw image is the RGGB format. In the first raw image, a color component of a pixel in a first row and a first column is R, a color component of a pixel in the first row and a second column is G, a color component of a pixel in a second row and the first column is G, a color component of a pixel in the second row and the second column is B, and pixels with the four color components appear cyclically.

For another example, the Bayer raw format of the first raw image is the GRGB format. In the first raw image, a color component of a pixel in a first row and a first column is G, a color component of a pixel in the first row and a second column is R, a color component of a pixel in a second row and the first column is G, a color component of a pixel in the second row and the second column is B, and pixels with the four color components appear cyclically.

In this embodiment of this application, after obtaining the first raw image, the first module may first perform nonlinear transform on the first raw image (for example, the nonlinear transform is implemented based on a gamma curve, an implementation is simple, and computing complexity can be reduced), to obtain a transformed first raw image. Nonlinear transform is performed on the first raw image, so that data distribution of the raw image can be more suitable for subsequent encoding, thereby improving image encoding performance and reducing an image encoding latency. For example, the first module may perform nonlinear transform on the first raw image in the following manner. $Y = {X}^{\frac{1}{gamma}}$

X represents a first normalized pixel value of a pixel in the first raw image, Y represents a second normalized pixel value (that is, a first normalized pixel value obtained after the nonlinear transform) of the pixel, and a value of gamma may be 2.2 or 2.4. Optionally, the first module may alternatively implement, in another nonlinear transform manner, nonlinear transform of a plurality of pixels included in the first raw image.

Then, the first module may perform color transform on the transformed first raw image to obtain the first sub-image, the second sub-image, the third sub-image, and the fourth sub-image. Color transform is performed on the transformed first raw image, so that data correlation between different channels can be removed, and redundant information between color signals can be removed, thereby improving image compression performance, and reducing computing complexity (or referred to as image processing complexity). For example, the computing complexity can be reduced by more than 60%, thereby improving the image compression performance. For example, the first sub-image may be a Y sub-image, the second sub-image may be a Dg sub-image, the third sub-image may be a Co sub-image, and the fourth sub-image may be a Cg sub-image.

For example, the transformed first raw image may include a plurality of image units, any image unit includes a plurality of pixels, and any pixel corresponds to one pixel value. For each image unit, the first module may determine, based on pixel values of a plurality of pixels included in the image unit, a first value (for example, a Y value), a second value (for example, a Dg value), a third value (for example, a Co value), and a fourth value (for example, a Cg value) that correspond to the image unit. After determining first values (for example, Y values), second values (for example, Dg values), third values (for example, Co values), and fourth values (for example, Cg values) respectively corresponding to the plurality of image units, the first module may generate the first sub-image (for example, a Y sub-image) based on the first values (for example, Y values) respectively corresponding to the plurality of image units. The first module may generate the second sub-image (for example, a Dg sub-image) based on the second values (for example, Dg values) respectively corresponding to the plurality of image units. The first module may generate the third sub-image (for example, a Co sub-image) based on the third values (for example, Co values) respectively corresponding to the plurality of image units. The first module may generate the fourth sub-image (for example, a Cg sub-image) based on the fourth values (for example, Cg values) respectively corresponding to the plurality of image units. It should be understood that the foregoing four sub-images may also be understood as four channel signals (for example, a channel signal Y, a channel signal Dg, a channel signal Co, and a channel signal Cg).

For example, the transformed first raw image includes a specific image unit (for example, an image unit A), the image unit A includes four pixels (for example, a pixel 1, a pixel 2, a pixel 3, and a pixel 4), the first value is a Y value, the second value is a Dg value, the third value is a Co value, and the fourth value is a Cg value. It is assumed that a pixel value (or a color component) of the pixel 1 included in the image unit A is G1, a pixel value of the pixel 2 is G2, a pixel value of the pixel 3 is R, and a pixel value of the pixel 4 is B. For example, the first module may obtain a Y value, a Dg value, a Co value, and a Cg value corresponding to the image unit A through calculation in the following manner: $\left[\begin{matrix}Y \\ Dg \\ Co \\ Cg\end{matrix}\right] = \left[\begin{matrix}\frac{1}{4} & \frac{1}{4} & \frac{1}{4} & \frac{1}{4} \\ - 1 & 1 & 0 & 0 \\ 0 & 0 & 1 & - 1 \\ \frac{1}{2} & \frac{1}{2} & - \frac{1}{2} & - \frac{1}{2}\end{matrix}\right] \left[\begin{matrix}G 1 \\ G 2 \\ R \\ B\end{matrix}\right]$

A process of implementing color transform by the first module in the foregoing manner is simple, and usually relates to only addition and shifting. Optionally, the first module may alternatively use an existing color transform manner or another color transform manner to implement color transform of the nonlinear-transformed first raw image.

It should be understood that the pixel value G1 of the pixel 1, the pixel value G2 of the pixel 2, the pixel value R of the pixel 3, and the pixel value B of the pixel 4 are all pixel values obtained after nonlinear transform.

Step 203: The first module stitches the first sub-image, the second sub-image, the third sub-image, and the fourth sub-image in a specified stitching manner, to obtain a grayscale image.

For example, the specified stitching manner may include but is not limited to a matrix concatenation manner, a horizontal stitching manner, or the like.

Based on the foregoing content, the following describes, in the following several possible implementations, an implementation process in which the first module stitches the first sub-image, the second sub-image, the third sub-image, and the fourth sub-image to obtain the grayscale image.

Manner 1: The first module stitches the first sub-image, the second sub-image, the third sub-image, and the fourth sub-image in the matrix concatenation manner (for example, a grid shape into which a plurality of sub-images are stitched or stitching positions of a plurality of sub-images (or a stitching sequence of a plurality of sub-images)), to obtain a grayscale image whose shape is a grid.

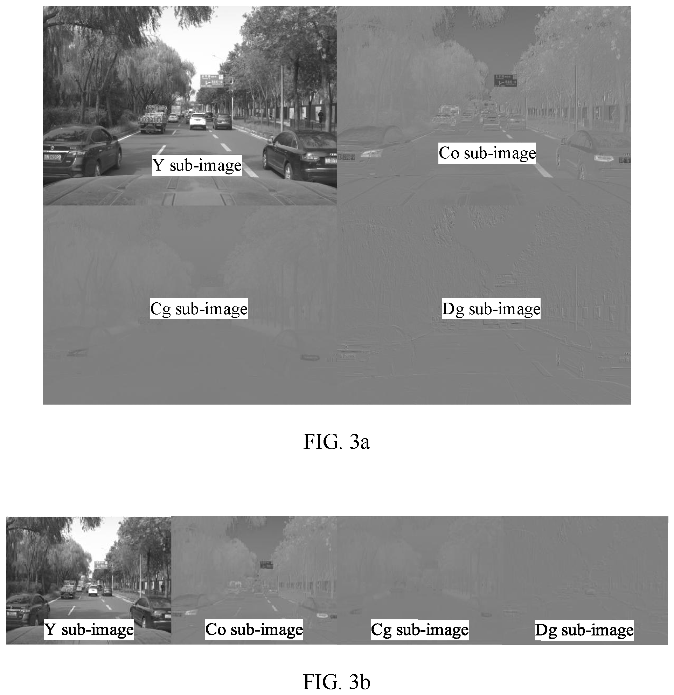

For example, the first sub-image is a Y sub-image, the second sub-image is a Dg sub-image, the third sub-image is a Co sub-image, the fourth sub-image is a Cg sub-image, and the matrix concatenation manner is that the four sub-images are stitched into a four-grid image, the Y sub-image and the Co sub-image are located in a first row, the Cg sub-image and the Dg sub-image are located in a second row, the Y sub-image and the Cg sub-image are located in a first column, and the Co sub-image and the Dg sub-image are located in a second column. In an example, the first module may stitch, in a matrix concatenation manner specified by a user, the Y sub-image, the Co sub-image, the Cg sub-image, and the Dg sub-image into a YCoCgDg image shown in FIG. 3a. In another example, the first module may stitch, in a matrix concatenation manner negotiated by the first module and the second module, the Y sub-image, the Co sub-image, the Cg sub-image, and the Dg sub-image into a YCoCgDg image shown in FIG. 3a. A length and a width of the YCoCgDg image obtained through stitching in Manner 1 are consistent with a length and a width of the first raw image, but a 0.5-frame extra latency (about 16 ms@30 fps) may be caused. In addition, from a perspective of hardware implementation, the width of the image obtained through stitching in Manner 1 is about only half of a width of an image obtained through stitching in Manner 2. Therefore, a requirement for an on-chip line buffer (LineBuffer) in Manner 1 is halved. This helps reduce chip costs.

Manner 2: The first module stitches the first sub-image, the second sub-image, the third sub-image, and the fourth sub-image in the horizontal stitching manner (for example, a strip shape into which a plurality of sub-images are stitched or stitching positions of a plurality of sub-images (or a stitching sequence of a plurality of sub-images)), to obtain a grayscale image whose shape is a strip.

For example, the first sub-image is a Y sub-image, the second sub-image is a Dg sub-image, the third sub-image is a Co sub-image, the fourth sub-image is a Cg sub-image, and the horizontal stitching manner is that the four sub-images are stitched into a strip-shaped image, the Y sub-image, the Dg sub-image, the Co sub-image, and the Cg sub-image are arranged in a same row, and a stitching sequence of the four sub-images is sequentially the Y sub-image, the Co sub-image, the Cg sub-image, and the Dg sub-image. In an example, the first module may sequentially stitch, in a horizontal stitching manner specified by a user, the Y sub-image, the Co sub-image, the Cg sub-image, and the Dg sub-image into a YCoCgDg image shown in FIG. 3b. In another example, the first module may stitch, in a horizontal stitching manner negotiated by the first module and the second module, the Y sub-image, the Co sub-image, the Cg sub-image, and the Dg sub-image into a YCoCgDg image shown in FIG. 3b. In Manner 2, only a 64-pixel line latency is caused (H.265, LCU_size=64, about 1 ms@30 fps). Considering that the latency also exists in a conventional image encoding scheme (or a conventional image encoding and decoding scheme), no extra latency is caused in Manner 2 actually. In addition, in terms of image encoding performance (or image compression performance), because image content at stitching boundaries is basically irrelevant, Manner 1 and Manner 2 almost have same compression performance. Further, compared with Manner 1, Manner 2 is more suitable for a low-latency application scenario, and does not reduce image compression performance.

Step 204: The first module encodes the grayscale image to obtain an encoded stream.

Step 205: The first module sends the encoded stream to the second module. The second module receives the encoded stream.

In this embodiment of this application, the first module may encode the grayscale image according to a specified video encoding standard or by reusing an existing encoding and decoding (Encoder and decoder, CODEC) standard, to obtain the encoded stream. The encoded stream is used to carry the grayscale image (for example, the YCoCgDg image shown in FIG. 3a or the YCoCgDg image shown in FIG. 3b). Then, the first module may send the encoded stream to the second module.

For example, the specified video encoding standard or the existing encoding and decoding standard may include but is not limited to H.264, H.265, H.266, AV1, AVS3, or the like. Encoding and decoding performance in these standards is far better than that in JPEG-XS. An objective of selecting these standards is to achieve better compression performance. In addition, reusing (or using) the existing encoding and decoding standard further has openness and flexibility, and an appropriate encoding and decoding standard may be selected according to different application scenarios.

For example, using the H.265 encoding and decoding standard as an example, the first module may encode the grayscale image by using the H.265 encoding and decoding standard, to obtain the encoded stream. Then, the first module may send the encoded stream to the second module.

Step 206: The second module decodes the encoded stream to obtain the grayscale image.

After obtaining the encoded stream from the first module, the second module may decode the encoded stream to obtain the grayscale image.

In this embodiment of this application, the second module may decode the encoded stream by using a video decoding standard corresponding to the specified video encoding standard or by reusing the existing encoding and decoding standard, to obtain the grayscale image (for example, the YCoCgDg image shown in FIG. 3a or the YCoCgDg image shown in FIG. 3b).

For example, the first module uses the H.265 encoding and decoding standard, and the grayscale image is the YCoCgDg image shown in FIG. 3a. The second module may decode the encoded stream by using the H.265 encoding and decoding standard, to obtain the YCoCgDg image shown in FIG. 3a.

Step 207: The second module splits the grayscale image into the first sub-image, the second sub-image, the third sub-image, and the fourth sub-image.

Step 208: The second module performs inverse transform on the first sub-image, the second sub-image, the third sub-image, and the fourth sub-image to obtain a second raw image.

In a possible implementation, the second module may first split the grayscale image (for example, the YCoCgDg image shown in FIG. 3a or the YCoCgDg image shown in FIG. 3b) into the first sub-image (for example, a Y sub-image), the second sub-image (for example, a Dg sub-image), the third sub-image (for example, a Co sub-image), and the fourth sub-image (for example, a Cg sub-image). In an example, when the first module uses the matrix concatenation manner negotiated by the first module and the second module, the second module may crop the grayscale image in a four-grid cropping manner (for example, horizontally and equally cropping the grayscale image once, and vertically and equally cropping the grayscale image once), to obtain the first sub-image (for example, a Y sub-image), the third sub-image (for example, a Co sub-image), the fourth sub-image (for example, a Cg sub-image), and the second sub-image (for example, a Dg sub-image). In another example, when the first module uses the horizontal stitching manner negotiated by the first module and the second module, the second module may crop the grayscale image in a quartering cropping manner (for example, cropping the grayscale image three times at an equal distance), to obtain the first sub-image (for example, a Y sub-image), the third sub-image (for example, a Co sub-image), the fourth sub-image (for example, a Cg sub-image), and the second sub-image (for example, a Dg sub-image). Then, the second module may perform inverse color transform on the first sub-image, the second sub-image, the third sub-image, and the fourth sub-image to obtain the second raw image.

For example, when performing inverse color transform on the first sub-image, the second sub-image, the third sub-image, and the fourth sub-image, the second module may determine, based on the first sub-image, the first value corresponding to each of the plurality of image units, determine, based on the second sub-image, the second value corresponding to each of the plurality of image units, determine, based on the third sub-image, the third value corresponding to each of the plurality of image units, and determine, based on the fourth sub-image, the fourth value corresponding to each of the plurality of image units. Subsequently, the second module may determine, based on the first value, the second value, the third value, and the fourth value that correspond to each of the plurality of image units, the pixel values of the plurality of pixels included in each image unit. Then, the second module may determine the transformed first raw image based on the pixel values of the plurality of pixels included in each of the plurality of image units. The transformed first raw image is used as the second raw image.

Still for example, the transformed first raw image includes a specific image unit (for example, an image unit A), the image unit A includes four pixels (for example, a pixel 1, a pixel 2, a pixel 3, and a pixel 4), the first value corresponding to the image unit A is a Y value, the second value is a Dg value, the third value is a Co value, and the fourth value is a Cg value. The second module may first obtain, from the grayscale image, the Y value, the Dg value, the Co value, and the Cg value that correspond to the image unit A. Then, the second module may obtain a pixel value of the pixel 1, a pixel value of the pixel 2, a pixel value of the pixel 3, and a pixel value of the pixel 4 included in the image unit A through calculation in the following manner: $\left[\begin{matrix}G 1 \\ G 2 \\ R \\ B\end{matrix}\right] = \left[\begin{matrix}1 & - \frac{1}{2} & 0 & \frac{1}{2} \\ 1 & \frac{1}{2} & 0 & \frac{1}{2} \\ 1 & 0 & \frac{1}{2} & - \frac{1}{2} \\ 1 & 0 & - \frac{1}{2} & - \frac{1}{2}\end{matrix}\right] \left[\begin{matrix}Y \\ Dg \\ Co \\ Cg\end{matrix}\right]$

G1 represents the pixel value of the pixel 1, G2 represents the pixel value of the pixel 2, R represents the pixel value of the pixel 3, and B represents the pixel value of the pixel 4.

A process of implementing inverse color transform by the second module in the foregoing manner is simple, and usually relates to only addition and shifting. Optionally, the second module may alternatively use an existing inverse color transform manner or another inverse color transform manner to implement inverse color transform of the grayscale image.

In another possible implementation, after performing inverse color transform on the first sub-image, the second sub-image, the third sub-image, and the fourth sub-image to obtain the second raw image, the second module may also perform nonlinear inverse transform on the transformed first raw image to obtain the first raw image. The first raw image may be used as the second raw image.

For example, the second module may perform nonlinear inverse transform on the first raw image in the following manner: $X = {Y}^{gamma}$

X represents a first normalized pixel value of a pixel in the first raw image, Y represents a second normalized pixel value (that is, a first normalized pixel value obtained after the nonlinear transform) of the pixel, and a value of gamma may be 2.2 or 2.4. Optionally, the first module may alternatively implement nonlinear inverse transform of the plurality of sub-images in the grayscale image in another nonlinear inverse transform manner.

An image unit (for example, the image unit A) included in the transformed first raw image is still used as an example. After calculating the pixel value G1 of the pixel 1, the pixel value G2 of the pixel 2, the pixel value R of the pixel 3, and the pixel value B of the pixel 4 included in the image unit A, the second module may separately perform nonlinear inverse transform on the pixel value G1 of the pixel 1, the pixel value G2 of the pixel 2, the pixel value R of the pixel 3, and the pixel value B of the pixel 4 to obtain an inverse-transformed pixel value G1' of the pixel 1, an inverse-transformed pixel value G2' of the pixel 2, an inverse-transformed pixel value R' of the pixel 3, and an inverse-transformed pixel value B' of the pixel 4. In this way, after calculating respective inverse-transformed pixel values of the plurality of pixels included in each of the plurality of image units, the second module may determine the first raw image based on the respective inverse-transformed pixel values of the plurality of pixels included in each of the plurality of image units.

Optionally, after determining the second raw image, the second module may transmit the second raw image to a downstream task module (for example, a machine vision-oriented module (for example, a raw domain visual perception module) or a human eye vision-oriented module (for example, a bit rate adaptive artificial intelligence (artificial intelligence, AI)-ISP module)).

In an example, the downstream task module is a raw domain visual perception module (or referred to as a raw domain perception module). The second module transmits the second raw image to the raw domain visual perception module. After obtaining the second raw image, the raw domain visual perception module may perform machine vision processing (such as classification, target recognition, target detection, and segmentation) on the second raw image. In comparison with a conventional image encoding scheme (or an image encoding and decoding scheme) in which complex ISP processing (which includes demosaic, and optionally, may further include one or more of Gamma, a color correction matrix (Color Correction Matrix, CCM), tone mapping (Tone Mapping), image format transform (for example, transform from a raw format to an RGB format and transform from an RGB format to a YUV format), and the like) is performed on a raw image from an image capturing apparatus, in the image processing solution provided in this embodiment of this application, the first module does not need to perform complex ISP processing (the complex ISP processing usually takes 23s (or ms), and preprocessing for a raw image in the first module usually takes 1s (or ms)). Therefore, processing time for the raw image (for example, preprocessing time and encoding time for the raw image) can be reduced, computing complexity can be reduced, and neither the first module nor the second module relates to complex ISP processing. This can avoid that visual perception precision of the raw domain visual perception module is affected because complex ISP processing causes noise, and can help improve a visual perception effect of the raw domain visual perception module. In addition, because neither the first module nor the second module relates to complex ISP processing, the image processing solution provided in this embodiment of this application can be better applied to a low-latency scenario. Certainly, in the image processing solution provided in this embodiment of this application, computing power of the raw domain visual perception module may also be fully used, to improve visual perception precision of the raw domain visual perception module.

For example, the raw domain visual perception module is used for target detection. The raw domain visual perception module may input the second raw image into a trained target detection neural network model (for example, a YOLOV5 (You only look once version 5, YOLO series target detection) target detection algorithm), a single shot target detection algorithm (for example, a single shot multibox detector (single shot multibox detector, SSD)), or a two shot target detection algorithm (for example, a faster region convolutional neural network (faster region convolutional neural network, Faster R-CNN)), to implement target detection on the raw image.

In another example, the downstream task module is a bit rate adaptive AI-ISP module. The second module transmits the second raw image to the bit rate adaptive AI-ISP module. After obtaining the second raw image, the bit rate adaptive AI-ISP module may input the second raw image into an image signal processing model (for example, an AI-ISP model), to obtain an RGB image suitable for a human eye to view. That is, it may be understood that the second raw image is processed by an ISP to obtain an RGB image suitable for a human eye to view. Considering that the first module may introduce noise in an image encoding process, and different encoding bit rates (or referred to as different compression rates) correspond to different noise levels, the noise is further removed in the bit rate adaptive AI-ISP module, so that an image with better quality (or higher quality) (or an image with a better visual effect for a human eye) can be obtained, and a visual effect for a human eye can be improved. Certainly, in the solution provided in this example, computing power of the bit rate adaptive AI-ISP module can also be fully used, to improve image quality and improve a visual effect for a human eye. It should be noted that, for the solution provided in this example, a conventional image encoding and decoding scheme is not implemented.

Optionally, there is a mapping relationship between the image signal processing model and an encoding rate corresponding to the first raw image. That is, it may be understood that each encoding rate (or encoding bit rate) corresponds to one image signal processing model, or it may be understood that a corresponding image signal processing model is trained for each encoding rate. For example, the image signal processing model may include but is not limited to a convolutional neural network (convolutional neural network, CNN), a recurrent neural network (recurrent neural network, RNN), or the like.

For example, there are three encoding rates (for example, an encoding rate a, an encoding rate b, and an encoding rate c), the downstream task module is a bit rate adaptive AI-ISP module, and the image signal processing model is an AI-ISP model. The bit rate adaptive AI-ISP module or another device trains an AI-ISP model, for example, an AI-ISP model a, for the encoding rate a, trains an AI-ISP model, for example, an AI-ISP model b, for the encoding rate b, and trains an AI-ISP model, for example, an AI-ISP model c, for the encoding rate b. In this way, in the method, different AI-ISP models are configured for different encoding rates, to implement bit rate adaptive AI-ISP, so that noise corresponding to different encoding rates can be effectively removed, an image with optimal image quality can be obtained at each encoding rate, and flexibility is high. The AI-ISP model can be flexibly configured based on an actual requirement of the vehicle or the user, so that requirements in different application scenarios can be met (or adapted), and requirements of different users can be met. This helps improve universality of the image processing method.

For example, the bit rate adaptive AI-ISP module trains one corresponding AI-ISP model for each of the encoding rate a, the encoding rate b, and the encoding rate c. For a plurality of raw image samples, an encoded stream is formed after the plurality of raw image samples are preprocessed by the first module and encoded by using the encoding rate a, and is transmitted to the second module. The second module obtains a plurality of raw image samples after decoding and postprocessing the encoded stream, and transmits the plurality of raw image samples to the bit rate adaptive AI-ISP module. After obtaining the plurality of raw image samples, the bit rate adaptive AI-ISP module performs iterative training on an AI-ISP model by using the plurality of raw image training samples until the AI-ISP model converges or a quantity of training times is met, to obtain the AI-ISP model a corresponding to the encoding rate a. For the plurality of raw image samples, an encoded stream may also be formed after the plurality of raw image samples are preprocessed by the first module and encoded by using the encoding rate b, and is transmitted to the second module. The second module obtains a plurality of raw image samples after decoding and postprocessing the encoded stream, and transmits the plurality of raw image samples to the bit rate adaptive AI-ISP module. After obtaining the plurality of raw image samples, the bit rate adaptive AI-ISP module performs iterative training on an AI-ISP model by using the plurality of raw image training samples until the AI-ISP model converges or a quantity of training times is met, to obtain the AI-ISP model b corresponding to the encoding rate b. For the plurality of raw image samples, an encoded stream may also be formed after the plurality of raw image samples are preprocessed by the first module and encoded by using the encoding rate c, and is transmitted to the second module. The second module obtains a plurality of raw image samples after decoding and postprocessing the encoded stream, and transmits the plurality of raw image samples to the bit rate adaptive AI-ISP module. After obtaining the plurality of raw image samples, the bit rate adaptive AI-ISP module performs iterative training on an AI-ISP model by using the plurality of raw image training samples until the AI-ISP model converges or a quantity of training times is met, to obtain the AI-ISP model c corresponding to the encoding rate c.

It can be learned from step 201 to step 208 that in comparison with a conventional image encoding and decoding scheme, in the image processing solution provided in this application, complex ISP processing (which includes demosaic, and optionally, may further include one or more of Gamma, a CCM, tone mapping, image format transform (for example, transform from a raw format to an RGB format and transform from an RGB format to a YUV format), and the like) does not need to be performed. Therefore, processing time for a raw image can be reduced, and computing complexity can be reduced (for example, the computing complexity can be reduced by more than 60%). This helps improve image compression performance. In addition, in the image processing solution provided in this application, single-channel encoding is performed on the grayscale image (for example, a YCoCgDg image). Therefore, an amount of encoded data is small (the data amount is approximately one third of a data amount of encoding an image in a YUV format (or an RGB format)), and therefore, an encoding speed is high (encoding usually takes 12s (or ms), and conventional image encoding usually takes 17s (or ms)), so that image compression performance is effectively improved. In addition, a back-end module (for example, the downstream task module) may directly perform machine task processing based on the raw image. Because neither the first module nor the second module relates to complex ISP processing, visual perception precision for a downstream machine task can be improved, and the image processing solution provided in this application can be better applied to a low-latency scenario. In addition, in the image processing solution provided in this application, an image is encoded (or referred to as single-channel encoding) by using an existing encoding and decoding standard, so that better compression performance can be achieved, flexibility is high, and an appropriate encoding and decoding standard can be selected according to different application scenarios.

Based on the technical solution of the image processing method shown in FIG. 2, the following describes, by using examples, several application scenarios of the image processing method provided in embodiments of this application.

Application scenario 1: intelligent driving and cockpit.

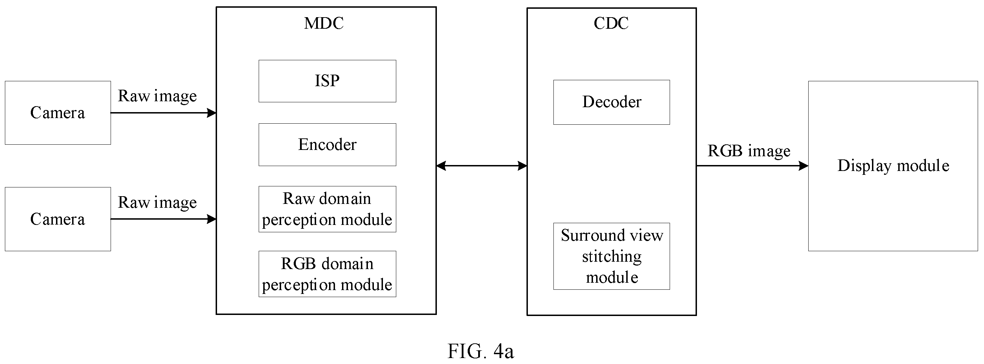

FIG. 4a is an example of a diagram in which a conventional image encoding and decoding scheme is used in an application scenario 1 according to an embodiment of this application. In the application scenario shown in FIG. 4a, a camera outputs a raw image; an ISP and an encoder (Encoder) are deployed in an MDC; a raw domain perception module and an RGB domain perception module are deployed in the MDC; a decoder (Decoder) is deployed in a CDC; a surround view stitching module is deployed in the CDC; and an image (for example, an RGB image (or referred to as an image in an RGB format)) output by the CDC is displayed on a display (Display) module. However, in the conventional image encoding and decoding scheme shown in FIG. 4a, the ISP and the encoder are deployed in the MDC. This causes heavy load of the MDC, further causes a high computing power requirement of the MDC, and increases image compression costs. In addition, the camera (or a video camera or a camera) (camera) shown in FIG. 4a outputs a large amount of raw data, and an uncompressed raw data rate is high. Therefore, it is difficult to support higher resolution, and a transmission line bundle requirement is high.

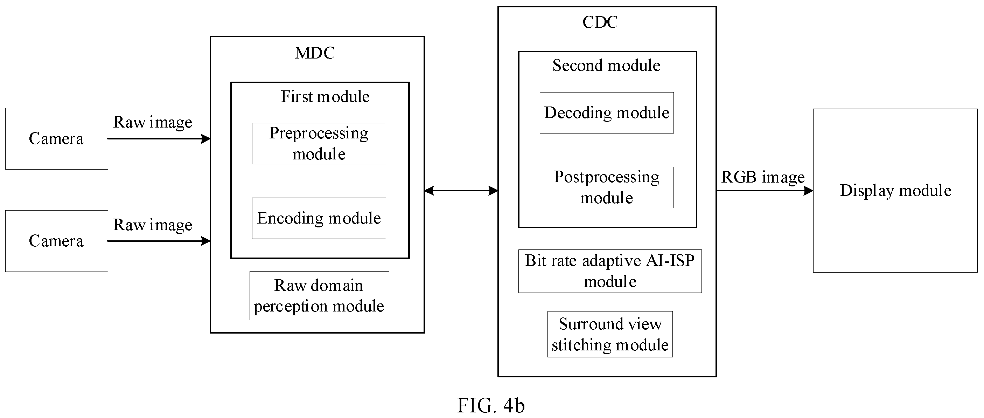

FIG. 4b is an example of a diagram in which an image processing solution provided in an embodiment of this application is used in an application scenario 1 according to an embodiment of this application. In the application scenario shown in FIG. 4b, a camera outputs a raw image; a first module (including a preprocessing module and an encoding module) is deployed in an MDC, which is equivalent to replacing the ISP and the encoder in the MDC shown in FIG. 4a; a second module (including a postprocessing module and a decoding module) is deployed in a CDC, which is equivalent to replacing the decoder in the CDC shown in FIG. 4a; a raw domain perception module is deployed in the MDC; and a bit rate adaptive AI-ISP module and a surround view stitching module are deployed in the CDC. An image (for example, an RGB image) output by the CDC is displayed on a display module. The MDC and the CDC may share raw compressed data (for example, an encoded stream used to carry a grayscale image), and secondary encoding is not needed. In comparison with the conventional image encoding and decoding scheme shown in FIG. 4a, in the image processing solution provided in this embodiment of this application shown in FIG. 4b, the ISP and the encoder in the MDC shown in FIG. 4a are replaced with the first module. Therefore, image processing time and image encoding time can be reduced, and computing complexity can be reduced (for example, the computing complexity can be reduced by more than 60%), thereby reducing a computing power requirement of the MDC. In addition, in the image processing solution provided in this embodiment of this application shown in FIG. 4b, an image with better quality can be obtained by using the bit rate adaptive AI-ISP module. This is more friendly to a human eye, and effectively improves quality of a cockpit image and improves a visual effect for the human eye. In addition, because the image processing solution provided in this embodiment of this application shown in FIG. 4b does not need to perform complex ISP processing (which includes demosaic, and optionally, may further include one or more of Gamma, a CCM, tone mapping, image format transform (for example, transform from a raw format to an RGB format and transform from an RGB format to a YUV format), and the like), information damage to a raw image is small. Further, in the image processing solution provided in this embodiment of this application shown in FIG. 4b, the raw domain visual perception module may be used to improve machine vision perception precision, to achieve a better visual perception effect.

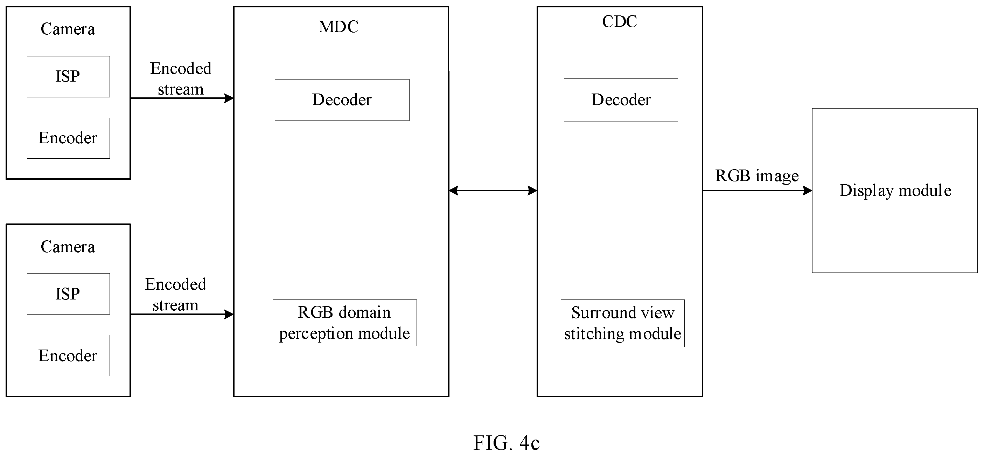

FIG. 4c is an example of another diagram in which a conventional image encoding and decoding scheme is used in an application scenario 1 according to an embodiment of this application. In the application scenario shown in FIG. 4c, an ISP and an encoder are deployed in a camera; decoders are separately deployed in an MDC and a CDC; and an RGB domain perception module is deployed in the MDC. A surround view stitching module is deployed in the CDC; and an image (for example, an RGB image) output by the CDC is displayed on a display module. The camera outputs an encoded stream used to carry an RGB image. However, in the conventional image encoding and decoding scheme shown in FIG. 4c, the ISP and the encoder are deployed in the camera, and consequently, costs and power consumption of the camera are increased. In addition, in the conventional image encoding and decoding scheme shown in FIG. 4c, in a process of processing an image by using the ISP and the encoder, information about the image is damaged, and therefore, a machine vision perception effect of a downstream task module is affected.

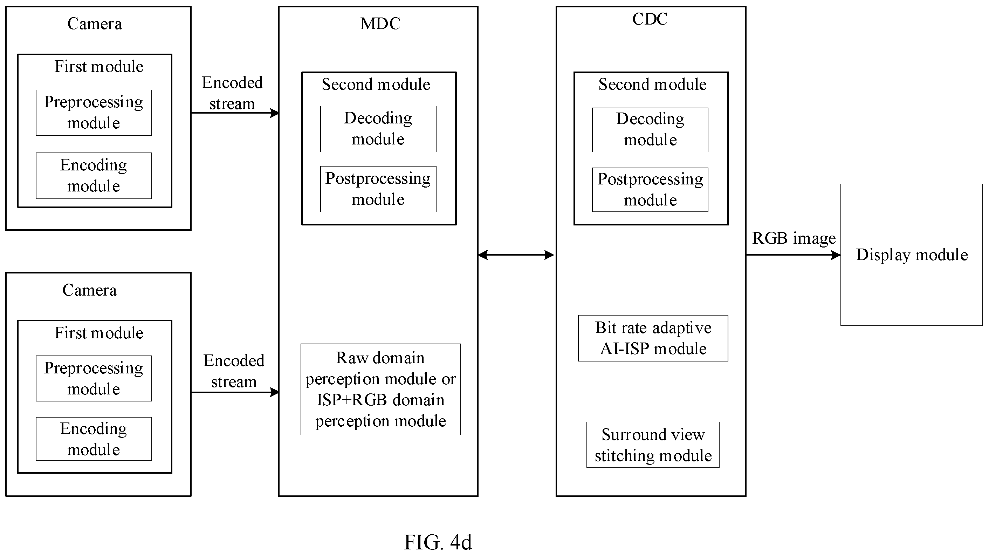

FIG. 4d is an example of another diagram in which an image processing solution provided in an embodiment of this application is used in an application scenario 1 according to an embodiment of this application. In the application scenario shown in FIG. 4d, a camera outputs an encoded stream used to carry a grayscale image; a first module (including a preprocessing module and an encoding module) is deployed in the camera, which is equivalent to replacing the ISP and the encoder in the camera shown in FIG. 4c; a second module (including a postprocessing module and a decoding module) is deployed in an MDC, which is equivalent to replacing the decoder in the MDC shown in FIG. 4c; a second module (including a postprocessing module and a decoding module) is also deployed in a CDC, which is equivalent to replacing the decoder in the CDC shown in FIG. 4c; a raw domain perception module or an ISP and an RGB domain perception module are deployed in the MDC; a bit rate adaptive AI-ISP module and a surround view stitching module are deployed in the CDC; and an image (for example, an RGB image) output by the CDC is displayed on a display module. The MDC and the CDC may share raw compressed data (for example, an encoded stream used to carry a grayscale image), and secondary encoding is not needed. In addition, because a raw image output by the second module may be used as an input of the raw domain perception module in the MDC, and raw domain perception belongs to a low-latency application scenario, in comparison with a matrix concatenation manner, a horizontal stitching manner used by the first module to stitch a plurality of sub-images is more suitable for the low-latency application scenario.

In comparison with the conventional image encoding and decoding scheme shown in FIG. 4c, in the image processing solution provided in this embodiment of this application shown in FIG. 4d, the ISP and the encoder in the camera shown in FIG. 4c are replaced with the first module. Therefore, image processing time and image encoding time can be reduced, and computing complexity can be reduced (for example, the computing complexity can be reduced by more than 60%), thereby helping implement a low-cost and low-power camera. In addition, because the image processing solution provided in this embodiment of this application shown in FIG. 4d does not need to perform complex ISP processing (which includes demosaic, and optionally, may further include one or more of Gamma, a CCM, tone mapping, image format transform (for example, transform from a raw format to an RGB format and transform from an RGB format to a YUV format), and the like), information damage to a raw image is small. In addition, in the image processing solution provided in this embodiment of this application shown in FIG. 4d, an image with better quality can be obtained by using the bit rate adaptive AI-ISP module. This is more friendly to a human eye, and effectively improves quality of a cockpit image and improves a visual effect for the human eye. Further, in the image processing solution provided in this embodiment of this application shown in FIG. 4d, the raw domain visual perception module may be used to improve machine vision perception precision, to achieve a better visual perception effect.

In comparison with the image processing solution provided in this embodiment of this application shown in FIG. 4b, in the image processing solution provided in this embodiment of this application shown in FIG. 4d, the first module is moved from the MDC to the camera. Because the MDC does not need to perform a complex image encoding procedure, a computing power requirement of the MDC can be further reduced. In addition, because a compression ratio is improved, the camera can support higher resolution (for example, 8k or 16k), and a transmission line bundle requirement can be reduced. In addition, because the first module is deployed in the camera, an uncompressed raw data rate of the camera can be reduced.

Application scenario 2: data collection to cloud training/recognition and storage.

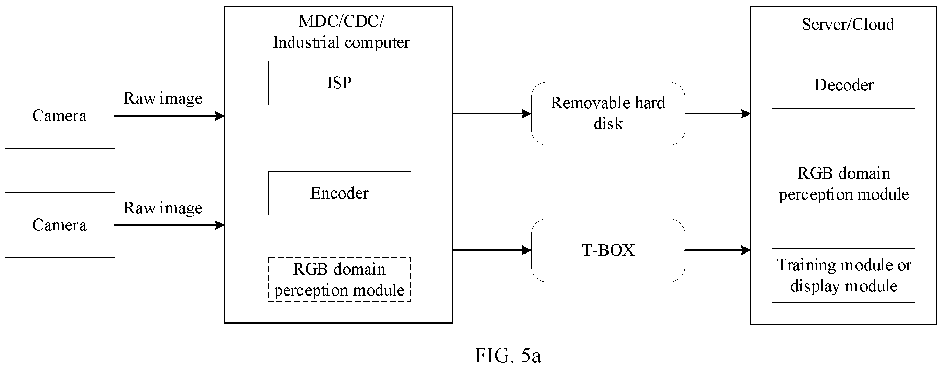

FIG. 5a is an example of a diagram in which a conventional image encoding and decoding scheme is used in an application scenario 2 according to an embodiment of this application. In the application scenario shown in FIG. 5a, a camera outputs a raw image; an ISP and an encoder are deployed in an MDC/CDC/industrial computer; an RGB domain perception module is deployed in a server/cloud; an encoded stream that is output by the MDC/CDC/industrial computer and that is used to carry a grayscale image (for example, a YCoCgDg image) may be stored in a removable hard disk or a remote communication terminal (or a telematics box) (Telematics BOX, T-BOX); a decoder is deployed in the server/cloud; a training module or a display module is deployed in the server/cloud; and a bit rate adaptive AI-ISP module is deployed in the server/cloud. The T-BOX may implement communication between a vehicle and the server/cloud. The server/cloud may obtain, from the removable hard disk or the T-BOX, the encoded stream used to carry the grayscale image. Optionally, the RGB domain perception module may be alternatively deployed in the MDC/CDC/industrial computer. However, the camera shown in FIG. 5a outputs a large amount of raw data, and an uncompressed raw data rate is high. Therefore, it is difficult to support higher resolution, and a transmission line bundle requirement is high. In addition, in the conventional image encoding and decoding scheme shown in FIG. 5a, in a process of processing an image by using the ISP and the encoder, information about the image is damaged, and therefore, a machine vision perception effect of a downstream task module is affected.

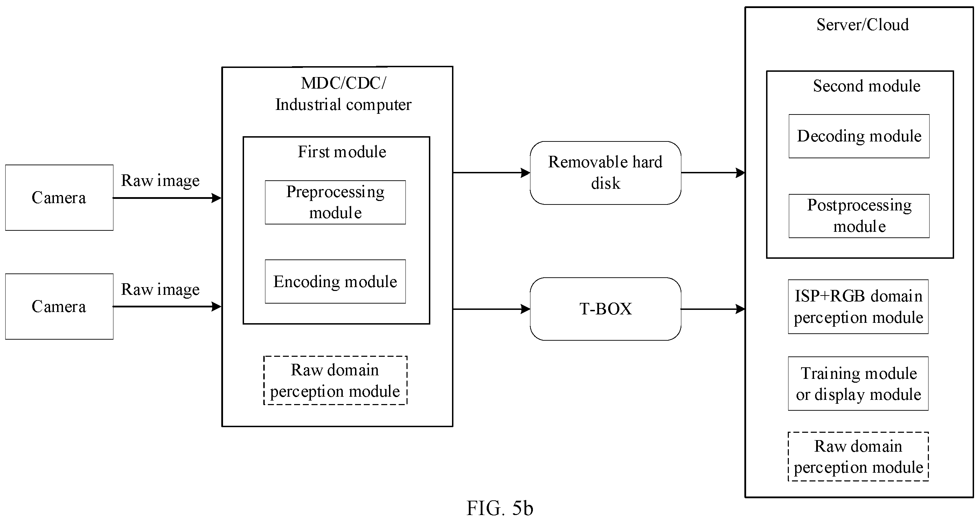

FIG. 5b is an example of a diagram in which an image processing solution provided in an embodiment of this application is used in an application scenario 2 according to an embodiment of this application. In the application scenario shown in FIG. 5b, a camera outputs a raw image; a first module (including a preprocessing module and an encoding module) is deployed in an MDC/CDC/industrial computer, which is equivalent to replacing the ISP and the encoder in the MDC/CDC/industrial computer shown in FIG. 5a; a second module (including a postprocessing module and a decoding module) is deployed in a server/cloud, which is equivalent to replacing the decoder in the server/cloud shown in FIG. 5a; an ISP and an RGB domain perception module are deployed in the server/cloud; a training module or a display module is deployed in the server/cloud; an encoded stream that is output by the MDC/CDC/industrial computer and that is used to carry a grayscale image may be stored in a removable hard disk or a T-BOX; and a bit rate adaptive AI-ISP module is deployed in the server/cloud. The server/cloud may obtain, from the removable hard disk or the T-BOX, the encoded stream used to carry the grayscale image. Optionally, the raw domain perception module may be alternatively deployed in the MDC/CDC/industrial computer, which is equivalent to replacing the RGB domain perception module in the MDC/CDC/industrial computer shown in FIG. 5a. When the MDC/CDC/industrial computer includes the raw domain perception module, the MDC/CDC/industrial computer may implement machine vision processing for a raw image by using the raw domain perception module. Optionally, the raw domain perception module may be alternatively deployed in the server/cloud. When the server/cloud includes the raw domain perception module, the server/cloud may implement machine vision processing for a raw image by using the raw domain perception module. In comparison with the conventional image encoding and decoding scheme shown in FIG. 5a, in the image processing solution provided in this embodiment of this application shown in FIG. 5b, the ISP and the encoder in the MDC/CDC/industrial computer shown in FIG. 5a are replaced with the first module. Therefore, image processing time and image encoding time can be reduced, and computing complexity can be reduced (for example, the computing complexity can be reduced by more than 60%). In addition, because the computing complexity is reduced, power consumption can be reduced (for example, power is saved), so that operation in a "sentinel" mode can be supported for a long time. In addition, because the image processing solution provided in this embodiment of this application shown in FIG. 5b does not need to perform complex ISP processing (which includes demosaic, and optionally, may further include one or more of Gamma, a CCM, tone mapping, image format transform (for example, transform from a raw format to an RGB format and transform from an RGB format to a YUV format), and the like), information damage to a raw image is small. In addition, in the image processing solution provided in this embodiment of this application shown in FIG. 5b, an image with better quality can be obtained by using the bit rate adaptive AI-ISP module. This is more friendly to a human eye, and effectively improves quality of a cockpit image and improves a visual effect for the human eye.

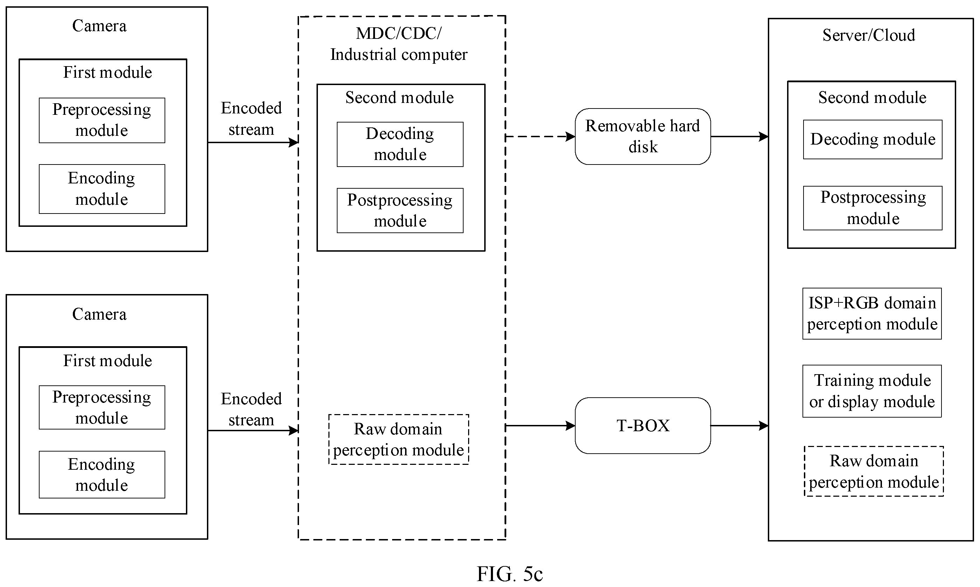

FIG. 5c is an example of another diagram in which an image processing solution provided in an embodiment of this application is used in an application scenario 2 according to an embodiment of this application. In the application scenario shown in FIG. 5c, a camera outputs an encoded stream used to carry a grayscale image; a first module (including a preprocessing module and an encoding module) is deployed in the camera, which is equivalent to moving the first module from the MDC/CDC/industrial computer shown in FIG. 5b to the camera; a second module (including a postprocessing module and a decoding module) is deployed in a server/cloud, which is equivalent to replacing the decoder in the server/cloud shown in FIG. 5a; an ISP and an RGB domain perception module are deployed in the server/cloud; a training module or a display module is deployed in the server/cloud; a bit rate adaptive AI-ISP module is deployed in the server/cloud; and a second module (including a postprocessing module and a decoding module) may also be deployed in an MDC/CDC/industrial computer. In an example, when the application scenario shown in FIG. 5c does not include the MDC/CDC/industrial computer, the encoded stream that is output by the camera and that is used to carry the grayscale image may be directly stored in a removable hard disk or a T-BOX. The server/cloud may obtain, from the removable hard disk or the T-BOX, the encoded stream used to carry the grayscale image. In another example, when the application scenario shown in FIG. 5c includes the MDC/CDC/industrial computer, the second module (including the postprocessing module and the decoding module) may also be deployed in the MDC/CDC/industrial computer, and the camera may transmit, to the MDC/CDC/industrial computer, the encoded stream used to carry the grayscale image. After the MDC/CDC/industrial computer processes the encoded stream used to carry the grayscale image by using the second module, a raw image is obtained, and the raw image may be stored in the removable hard disk or the T-BOX. The server/cloud may obtain the raw image from the removable hard disk or the T-BOX. Optionally, the raw domain perception module may be alternatively deployed in the MDC/CDC/industrial computer, which is equivalent to replacing the RGB domain perception module in the MDC/CDC/industrial computer shown in FIG. 5a. When the MDC/CDC/industrial computer includes the raw domain perception module, the MDC/CDC/industrial computer may implement machine vision processing for a raw image by using the raw domain perception module. Optionally, the raw domain perception module may be alternatively deployed in the server/cloud. When the server/cloud includes the raw domain perception module, the server/cloud may implement machine vision processing for a raw image by using the raw domain perception module. In comparison with the conventional image encoding and decoding scheme shown in FIG. 5a, in the image processing solution provided in this embodiment of this application shown in FIG. 5c, the first module is moved from the MDC/CDC/industrial computer to the camera. Because the MDC/CDC/industrial computer does not need to perform a complex image encoding procedure, a computing power requirement of the MDC can be further reduced. In addition, because a compression ratio is improved, the camera can support higher resolution (for example, 8k or 16k), and a transmission line bundle requirement can be reduced. In addition, because the first module is deployed in the camera, an uncompressed raw data rate of the camera can be reduced.

It should be noted that in descriptions of this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. The character "/" usually indicates an "or" relationship between the associated objects. "At least one of the following items (pieces)" or a similar expression thereof refers to any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first", "second", and "third" in embodiments of this application are used to distinguish between a plurality of objects, and are not used to limit a sequence, a time sequence, priorities, or importance of the plurality of objects. In addition, the terms "include", "contain", "have", and variations thereof that appear in this application all mean "including but not limited to", unless otherwise specifically emphasized in another manner.

In addition, it should be noted that each step in the foregoing embodiments may be performed by a corresponding device, or may be performed by a component like a chip, a processor, or a chip system in the device. This is not limited in embodiments of this application. The foregoing embodiments are described only by using an example in which each step is performed by the corresponding device.

It should be noted that in the foregoing embodiments, a part of steps may be selected for implementation, or a sequence of steps in the figure may be adjusted for implementation. This is not limited in this application. It should be understood that performing a part of steps in the figure, adjusting a sequence of steps, or combining the two manners for specific implementation shall fall within the protection scope of this application.

It may be understood that, to implement functions in the foregoing embodiments, devices in the foregoing embodiments include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

It should be noted that the "step" in embodiments of this application is merely an example, is a representation method used to better understand embodiments, and does not constitute a substantive limitation on execution of the solutions in this application. For example, the "step" may also be understood as a "feature". In addition, the step does not constitute any limitation on an execution sequence of the solutions in this application, and a new technical solution formed through an operation, for example, step sequence change, step combination, or step splitting, performed on this basis without affecting implementation of the overall solutions also falls within the scope disclosed in this application.

Based on a same concept, an embodiment of this application further provides a possible image processing system. The image processing system is applicable to the system architecture shown in FIG. 1. For example, the image processing system may be the image processing system shown in FIG. 1, or may be a functional element (for example, a plug-in, a component, or a chip) disposed in the image processing system. The functional element has a function of implementing the image processing method. In an example, the image processing system may be any device (for example, a computing device or a control unit) that has an image processing capability in a vehicle, for example, may be a camera, an MDC, or a CDC in the vehicle. In another example, the image processing system may be another device (for example, a server or a cloud) located outside a vehicle, or may be a functional element that is disposed in the another device and that has an image processing function. The functional element has a function of implementing the image processing method. Optionally, the image processing system may be configured to implement the image processing method provided in the foregoing embodiments, or a module (for example, a chip) of the image processing system may be configured to implement the image processing method provided in the foregoing embodiments. Therefore, beneficial effects of the foregoing embodiments can also be achieved.

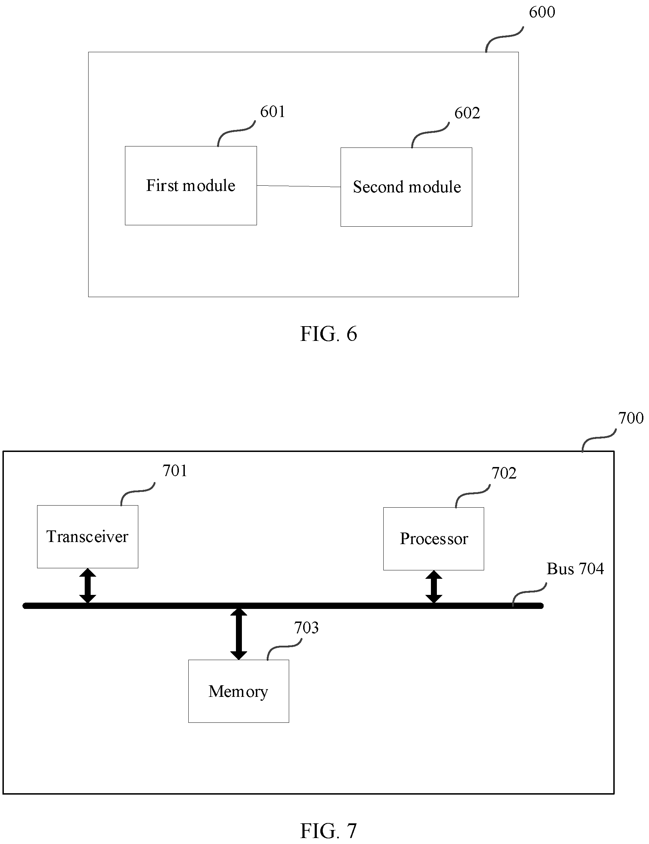

Refer to FIG. 6. An image processing system 600 includes a first module 601 and a second module 602. Optionally, the first module 601 may include a preprocessing module, an encoding module, and the like; and the second module 602 may include a decoding module, a postprocessing module, and the like.

When the image processing system 600 is configured to implement the function of the image processing system in the method embodiment shown in FIG. 2, the first module 601 is configured to obtain a first raw image, and transform the first raw image into a first sub-image, a second sub-image, a third sub-image, and a fourth sub-image. The first module 601 is further configured to stitch the first sub-image, the second sub-image, the third sub-image, and the fourth sub-image in a specified stitching manner, to obtain a grayscale image. The first module 601 is further configured to encode the grayscale image to obtain an encoded stream, and send the encoded stream to the second module. The second module 602 is configured to decode the encoded stream to obtain the grayscale image. The second module 602 is further configured to split the grayscale image into the first sub-image, the second sub-image, the third sub-image, and the fourth sub-image. The second module 602 is further configured to perform inverse transform on the first sub-image, the second sub-image, the third sub-image, and the fourth sub-image to obtain a second raw image.

For more detailed descriptions of the first module 601 and the second module 602, refer to related descriptions of the image processing system in the method embodiment shown in FIG. 2. Details are not described herein again.

It should be understood that, in this embodiment of this application, data receiving and sending functions (for example, an image obtaining function or an encoded stream sending function) of the first module 601 may be implemented by a transceiver or a transceiver-related circuit component, and a data processing function (for example, an image transform function, an image encoding function, or an image stitching function) of the first module 601 may be implemented by a processor or a processor-related circuit component. In this embodiment of this application, data receiving and sending functions (for example, an encoded stream obtaining function or an image sending function) of the second module 602 may be implemented by a transceiver or a transceiver-related circuit component, and a data processing function (for example, an image decoding function or an image transform function) of the second module 602 may be implemented by a processor or a processor-related circuit component.

For example, the first module 601 includes a preprocessing module and an encoding module. When the first module 601 is configured to implement a related function of the image processing system in the method embodiment shown in FIG. 2, the preprocessing module is configured to implement a function that the first module 601 obtains a first raw image and transforms the first raw image into a first sub-image, a second sub-image, a third sub-image, and a fourth sub-image; the preprocessing module is configured to implement a function that the first module 601 stitches the first sub-image, the second sub-image, the third sub-image, and the fourth sub-image in a specified stitching manner, to obtain a grayscale image; and the encoding module is configured to implement a function that the first module 601 encodes the grayscale image to obtain an encoded stream, and sends the encoded stream to the second module.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. For example, the preprocessing module and the encoding module are used as an example. The preprocessing module and the encoding module may be integrated into one module, or the preprocessing module and the encoding module are a same module. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer or a server) or a processor (processor) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept, an embodiment of this application further provides a possible image processing system. The image processing system is applicable to the system architecture shown in FIG. 1. The image processing system is configured to implement the technical solution related to the image processing system in the method embodiment shown in FIG. 2, and therefore can also achieve beneficial effects of the image processing system in the method embodiment shown in FIG. 2. Refer to FIG. 7. An image processing system 700 includes a transceiver 701 and a processor 702. Optionally, the image processing system 700 further includes a memory 703. The transceiver 701, the processor 702, and the memory 703 are connected to each other. When the image processing system 700 is configured to implement the technical solution related to the image processing system provided in the foregoing embodiments, the transceiver 701 may be configured to implement data receiving and sending functions of the first module 601, or may be configured to implement data receiving and sending functions of the second module 602; and the processor 702 may be configured to implement a data processing function of the first module 602, or may be configured to implement a data processing function of the second module 602.

Optionally, the transceiver 701, the processor 702, and the memory 703 are connected to each other by using a bus 704. The bus 704 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used for representation in FIG. 7, but this does not mean that there is only one bus or only one type of bus.

The transceiver 701 is configured to receive and send data. For example, the transceiver 701 is deployed in a first module included in the image processing system, or the transceiver 701 is deployed in an MDC (or an image capturing apparatus) in which the first module included in the image processing system is located. The transceiver 701 may be configured to communicate with a second module or the image capturing apparatus. In an example, the transceiver may be a transceiver apparatus integrated with data receiving and sending functions. In another example, the transceiver may alternatively include a transmitter and a receiver. The transmitter is configured to send data, and the receiver is configured to receive data.

Optionally, the transceiver 701 may include a transmitter and/or a receiver. The transmitter is configured to send a signal, a message, information, data, or the like. The receiver is configured to receive a signal, a message, information, data, or the like. For example, the transmitter sends a signal, a message, information, data, or the like under control of the processor 702. The receiver receives a signal, a message, information, data, or the like under control of the processor 702.

For a function of the processor 702, refer to descriptions of corresponding functions related to the image processing system in the method embodiment shown in FIG. 2. Details are not described herein again. The processor 702 may be a central processing unit (central processing unit, CPU), a network processor (network processor, NP), a combination of a CPU and an NP, or the like. The processor 702 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 702 may implement the foregoing functions by using hardware or certainly by using hardware executing corresponding software.

The memory 703 may include a volatile memory (volatile memory), for example, a random access memory (random access memory, RAM), and may further include a non-volatile memory (non-volatile memory), for example, at least one magnetic disk memory.

The memory 703 stores executable program code, and the processor 702 executes the executable program code to separately implement functions of the foregoing image processing system (for example, the first module and the second module), so as to implement the image processing method provided in embodiments of this application. In other words, the memory 703 stores computer program instructions used to perform the image processing method.

Alternatively, the memory 703 stores executable code, and the processor 702 executes the executable code to implement functions of the foregoing image processing system (for example, the first module and the second module), so as to implement the image processing method provided in embodiments of this application. In other words, the memory 703 stores computer program instructions used by the image processing system to perform the image processing method provided in embodiments of this application.

Based on a same concept, an embodiment of this application further provides a possible image processing system. The image processing system may include one or more of an MDC, a CDC, an industrial computer, or a server (or a cloud). Optionally, the image processing system may also include a display module, configured to display a raw image. For example, the image processing system includes the MDC and the CDC. In an example, a first module is deployed on the MDC, and a second module is deployed on the CDC. In another example, a first module is deployed on an image capturing apparatus, and a second module is deployed on each of the MDC and the CDC. For example, there may be one or more MDCs or CDCs included in the image processing system, and there may be one or more first modules or second modules. This is not limited in embodiments of this application. The image processing system may be deployed on a vehicle. Correspondingly, an embodiment of this application further provides a vehicle including an image capturing apparatus and the foregoing image processing system. The image capturing apparatus may be configured to obtain an image (for example, a raw image) corresponding to surrounding environment information of the vehicle.

Based on a same concept, an embodiment of this application further provides a computer program product. The computer program product includes a computer program or instructions. When the computer program or the instructions are run on a computer, the computer is enabled to perform the image processing method provided in the foregoing embodiments.

Based on a same concept, an embodiment of this application further provides a computer-readable storage medium. The computer-readable storage medium stores a computer program or instructions. When the computer program or the instructions are executed by a computer, the computer is enabled to perform the image processing method provided in the foregoing embodiments.

The storage medium may be any usable medium that can be accessed by a computer. By way of example and not limitation, the computer-readable medium may include a RAM, a ROM, an EEPROM, a CD-ROM or another optical disk storage, a magnetic disk storage medium or another magnetic storage device, or any other medium that can be used to carry or store expected program code in a form of an instruction or a data structure and that can be accessed by a computer.

Based on a same concept, an embodiment of this application further provides a chip. The chip is coupled to a memory, and the chip is configured to read a computer program stored in the memory, to implement the image processing method provided in the foregoing embodiments.

Based on a same concept, an embodiment of this application further provides a chip system. The chip system includes a processor, configured to support a computer apparatus in implementing a function related to the image processing system in the foregoing embodiments. In a possible design, the chip system further includes a memory, and the memory is configured to store a program and data that are necessary for the computer apparatus. The chip system may include a chip, or may include a chip and another discrete component.

All or some of the methods provided in embodiments of this application may be implemented by software, hardware, firmware, or any combination thereof. When software is used to implement the methods, all or some of the methods may be implemented in a form of a computer program product. The computer program product includes one or more computer instructions. When the computer instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device such as a server or a data center that integrates one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

Steps of the methods described in embodiments of this application may be directly embedded into hardware, a software unit executed by the processor, or a combination thereof. The software unit may be stored in a RAM, a ROM, an EEPROM, a register, a hard disk drive, a removable magnetic disk, a CD-ROM, or a storage medium of any other form in the art. For example, the storage medium may be connected to a processor, so that the processor may read information from the storage medium and write information into the storage medium. Optionally, the storage medium may be alternatively integrated into the processor. The processor and the storage medium may be disposed in an ASIC.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may be alternatively loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art may make various modifications and variations to this application without departing from the spirit and the scope of this application. Thus, this application is intended to cover these modifications and variations, provided that they fall within the scope of the claims of this application and their equivalent technologies.

## Claims

1. An image processing method, wherein the method is applied to an image processing system comprising a first module and a second module, and the method comprises:
obtaining, by the first module, a first raw image, and transforming the first raw image into a first sub-image, a second sub-image, a third sub-image, and a fourth sub-image;
stitching, by the first module, the first sub-image, the second sub-image, the third sub-image, and the fourth sub-image in a specified stitching manner, to obtain a grayscale image;
encoding, by the first module, the grayscale image to obtain an encoded stream, and sending the encoded stream to the second module;
decoding, by the second module, the encoded stream to obtain the grayscale image;
splitting, by the second module, the grayscale image into the first sub-image, the second sub-image, the third sub-image, and the fourth sub-image; and
performing, by the second module, inverse transform on the first sub-image, the second sub-image, the third sub-image, and the fourth sub-image to obtain a second raw image.

2. The method according to claim 1, wherein stitching, by the first module, the first sub-image, the second sub-image, the third sub-image, and the fourth sub-image in the specified stitching manner, to obtain the grayscale image comprises:
stitching, by the first module, the first sub-image, the second sub-image, the third sub-image, and the fourth sub-image in a matrix concatenation manner, to obtain the grayscale image, wherein a shape of the grayscale image is a grid.

3. The method according to claim 1, wherein stitching, by the first module, the first sub-image, the second sub-image, the third sub-image, and the fourth sub-image in the specified stitching manner, to obtain the grayscale image comprises:
stitching, by the first module, the first sub-image, the second sub-image, the third sub-image, and the fourth sub-image in a horizontal stitching manner, to obtain the grayscale image, wherein a shape of the grayscale image is a strip.

4. The method according to any one of claims 1 to 3, wherein transforming, by the first module, the first raw image into the first sub-image, the second sub-image, the third sub-image, and the fourth sub-image comprises:
performing, by the first module, nonlinear transform on the first raw image to obtain a transformed first raw image; and
performing, by the first module, color transform on the transformed first raw image to obtain the first sub-image, the second sub-image, the third sub-image, and the fourth sub-image; and
encoding, by the first module, the grayscale image to obtain the encoded stream comprises:
encoding, by the first module, the grayscale image according to a specified video encoding standard, to obtain the encoded stream.

5. The method according to claim 4, wherein the transformed first raw image comprises a plurality of image units, any image unit comprises a plurality of pixels, and any pixel corresponds to one pixel value; and
performing, by the first module, color transform on the transformed first raw image to obtain the first sub-image, the second sub-image, the third sub-image, and the fourth sub-image comprises:
determining, by the first module based on pixel values of the plurality of pixels comprised in each of the plurality of image units, a first value, a second value, a third value, and a fourth value that correspond to each image unit; and
generating, by the first module, the first sub-image based on first values respectively corresponding to the plurality of image units, generating the second sub-image based on second values respectively corresponding to the plurality of image units, generating the third sub-image based on third values respectively corresponding to the plurality of image units, and generating the fourth sub-image based on fourth values respectively corresponding to the plurality of image units.

6. The method according to claim 5, wherein performing, by the second module, inverse transform on the first sub-image, the second sub-image, the third sub-image, and the fourth sub-image to obtain the second raw image comprises:
determining, by the second module based on the first sub-image, the first value corresponding to each of the plurality of image units, determining, based on the second sub-image, the second value corresponding to each of the plurality of image units, determining, based on the third sub-image, the third value corresponding to each of the plurality of image units, and determining, based on the fourth sub-image, the fourth value corresponding to each of the plurality of image units;
determining, by the second module based on the first value, the second value, the third value, and the fourth value that correspond to each of the plurality of image units, the pixel values of the plurality of pixels comprised in each image unit; and
determining, by the second module, the transformed first raw image based on the pixel values of the plurality of pixels comprised in each of the plurality of image units, wherein the transformed first raw image is used as the second raw image.

7. The method according to any one of claims 1 to 6, wherein the second raw image is used as an input of a raw domain visual perception module, and the raw domain visual perception module is used for perception and recognition; or
the second raw image is used as an input of an image signal processing model, and the image signal processing model is configured to generate an RGB image suitable for a human eye to view.

8. The method according to claim 7, wherein there is a mapping relationship between the image signal processing model and an encoding rate corresponding to the first raw image.

9. The method according to any one of claims 1 to 8, wherein the first sub-image is a Y sub-image, the second sub-image is a Dg sub-image, the third sub-image is a Co sub-image, and the fourth sub-image is a Cg sub-image.

10. The method according to any one of claims 1 to 9, wherein the first module is deployed in an image capturing apparatus, and the second module is deployed in a first data processing module; or the first module is deployed in the first data processing module, and the second module is deployed in a second data processing module.

11. An image processing system, comprising:
a first module, configured to obtain a first raw image, and transform the first raw image into a first sub-image, a second sub-image, a third sub-image, and a fourth sub-image, wherein
the first module is further configured to stitch the first sub-image, the second sub-image, the third sub-image, and the fourth sub-image in a specified stitching manner, to obtain a grayscale image;
the first module is further configured to encode the grayscale image to obtain an encoded stream, and send the encoded stream to a second module;
the second module is configured to decode the encoded stream to obtain the grayscale image;
the second module is further configured to split the grayscale image into the first sub-image, the second sub-image, the third sub-image, and the fourth sub-image; and
the second module is further configured to perform inverse transform on the first sub-image, the second sub-image, the third sub-image, and the fourth sub-image to obtain a second raw image.

12. The system according to claim 11, wherein when stitching the first sub-image, the second sub-image, the third sub-image, and the fourth sub-image in the specified stitching manner, to obtain the grayscale image, the first module is specifically configured to:
stitch the first sub-image, the second sub-image, the third sub-image, and the fourth sub-image in a matrix concatenation manner, to obtain the grayscale image, wherein a shape of the grayscale image is a grid.

13. The system according to claim 11, wherein when stitching the first sub-image, the second sub-image, the third sub-image, and the fourth sub-image in the specified stitching manner, to obtain the grayscale image, the first module is specifically configured to:
stitch the first sub-image, the second sub-image, the third sub-image, and the fourth sub-image in a horizontal stitching manner, to obtain the grayscale image, wherein a shape of the grayscale image is a strip.

14. The system according to any one of claims 11 to 13, wherein when transforming the first raw image into the first sub-image, the second sub-image, the third sub-image, and the fourth sub-image, the first module is specifically configured to:
perform nonlinear transform on the first raw image to obtain a transformed first raw image;
and
perform color transform on the transformed first raw image to obtain the first sub-image, the second sub-image, the third sub-image, and the fourth sub-image; and
when encoding the grayscale image to obtain the encoded stream, the first module is specifically configured to:
encode the grayscale image according to a specified video encoding standard, to obtain the encoded stream.

15. The system according to claim 14, wherein the transformed first raw image comprises a plurality of image units, any image unit comprises a plurality of pixels, and any pixel corresponds to one pixel value; and
when performing color transform on the transformed first raw image to obtain the first sub-image, the second sub-image, the third sub-image, and the fourth sub-image, the first module is specifically configured to:
determine, based on pixel values of the plurality of pixels comprised in each of the plurality of image units, a first value, a second value, a third value, and a fourth value that correspond to each image unit; and
generate the first sub-image based on first values respectively corresponding to the plurality of image units, generate the second sub-image based on second values respectively corresponding to the plurality of image units, generate the third sub-image based on third values respectively corresponding to the plurality of image units, and generate the fourth sub-image based on fourth values respectively corresponding to the plurality of image units.

16. The system according to claim 15, wherein when performing inverse transform on the first sub-image, the second sub-image, the third sub-image, and the fourth sub-image to obtain the second raw image, the second module is specifically configured to:
determine, based on the first sub-image, the first value corresponding to each of the plurality of image units, determine, based on the second sub-image, the second value corresponding to each of the plurality of image units, determine, based on the third sub-image, the third value corresponding to each of the plurality of image units, and determine, based on the fourth sub-image, the fourth value corresponding to each of the plurality of image units;
determine, based on the first value, the second value, the third value, and the fourth value that correspond to each of the plurality of image units, the pixel values of the plurality of pixels comprised in each image unit; and
determine the transformed first raw image based on the pixel values of the plurality of pixels comprised in each of the plurality of image units, wherein the transformed first raw image is used as the second raw image.

17. The system according to any one of claims 11 to 16, wherein the second raw image is used as an input of a raw domain visual perception module, and the raw domain visual perception module is used for perception and recognition; or
the second raw image is used as an input of an image signal processing model, and the image signal processing model is configured to generate an RGB image suitable for a human eye to view.

18. The system according to claim 17, wherein there is a mapping relationship between the image signal processing model and an encoding rate corresponding to the first raw image.

19. The system according to any one of claims 11 to 18, wherein the first sub-image is a Y sub-image, the second sub-image is a Dg sub-image, the third sub-image is a Co sub-image, and the fourth sub-image is a Cg sub-image.

20. The system according to any one of claims 11 to 19, wherein the first module is deployed in an image capturing apparatus, and the second module is deployed in a first data processing module; or the first module is deployed in the first data processing module, and the second module is deployed in a second data processing module.

21. The system according to claim 20, wherein when the first module is deployed in the image capturing apparatus, and the second module is deployed in the first data processing module, the first data processing module is a mobile data computing platform or a cockpit domain controller; or
when the first module is deployed in the first data processing module, and the second module is deployed in the second data processing module, the first data processing module is a mobile data computing platform, and the second data processing module is a cockpit domain controller; or
when the first module is deployed in the first data processing module, and the second module is deployed in the second data processing module, the first data processing module is a mobile data computing platform, a cockpit domain controller, or an industrial computer, and the second data processing module is a server or a cloud.

22. An image processing system, comprising a transceiver, a memory, and a processor, wherein
the transceiver is configured to receive and send data;
the memory is configured to store computer program instructions and data; and
the processor is configured to invoke the computer program instructions and the data in the memory, to enable the image processing system to perform the method according to any one of claims 1 to 10.

23. A vehicle, comprising an image capturing apparatus and the image processing system according to any one of claims 11 to 21 or the image processing system according to claim 22, wherein the image capturing apparatus is configured to obtain an image corresponding to surrounding environment information of the vehicle.

24. A computer-readable storage medium, wherein the computer-readable storage medium stores a computer program or instructions, and when the computer program or the instructions are executed by a computer, the computer is enabled to perform the method according to any one of claims 1 to 10.

25. A computer program product, wherein the computer program product comprises a computer program or instructions, and when the computer program or the instructions are run on a computer, the computer is enabled to perform the method according to any one of claims 1 to 10.

26. A chip, wherein the chip comprises a processor, the processor is coupled to a memory and is configured to execute a computer program or instructions stored in the memory, and when the computer program or the instructions are executed, the method according to any one of claims 1 to 10 is implemented.
